(19) Europäisches Patentamt
European Patent Office
Office européen des brevets

(11) **EP 3 770 879 B1**

(12) **EUROPÄISCHE PATENTSCHRIFT**

(45) Veröffentlichungstag und Bekanntmachung des Hinweises auf die Patenterteilung:
**06.08.2025   Patentblatt 2025/32**

(21) Anmeldenummer: **20180591.8**

(22) Anmeldetag: **17.06.2020**

(51) Internationale Patentklassifikation (IPC):
**G08G 1/0962** *(2006.01)*      **G08G 1/01** *(2006.01)*
**G06F 16/55** *(2019.01)*      **G06V 20/58** *(2022.01)*
**G08G 1/095** *(2006.01)*

(52) Gemeinsame Patentklassifikation (CPC):
**G08G 1/09623; G06V 20/584;** G08G 1/095

(54) **VERFAHREN, VORRICHTUNG UND COMPUTERPROGRAMM ZUM AUFBEREITEN VON DATEN ÜBER EINE AMPELANLAGE**

METHOD, DEVICE AND COMPUTER PROGRAM FOR PROCESSING DATA ABOUT A TRAFFIC SYSTEM

PROCÉDÉ, DISPOSITIF ET PROGRAMME INFORMATIQUE PERMETTANT DE TRAITER DES DONNÉES AU NIVEAU D'UN FEU DE SIGNALISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2019   DE 102019211100**

(43) Veröffentlichungstag der Anmeldung:
**27.01.2021   Patentblatt 2021/04**

(73) Patentinhaber: **VOLKSWAGEN AG**
**38440 Wolfsburg (DE)**

(72) Erfinder:
• **Klomp, Sven**
  **31311 Uetze / Dollbergen (DE)**
• **Grube Krebs, Pablo**
  **10827 Berlin (DE)**
• **Hessel, Toralf**
  **13187 Berlin (DE)**
• **Max, Stephan**
  **38518 Gifhorn (DE)**

(56) Entgegenhaltungen:
EP-A1- 2 526 508          DE-A1- 102012 207 620
DE-A1- 102018 007 962     US-A1- 2013 253 754
US-A1- 2019 095 514

**Beschreibung**

Die vorliegende Erfindung betrifft ein Verfahren, eine Vorrichtung und ein Computerprogramm zum Aufbereiten von Daten über eine Ampelanlage.

Es gibt automatische Fahrfunktionen eines Kraftfahrzeugs, die u.a. Informationen von Ampelanlagen und von umgebenden Fahrzeugen verarbeiten, um entsprechend im Straßenverkehr zu reagieren.

Aus der DE 10 2013 2019 206 A1 ist bekannt, Historiendaten aufzubereiten, die repräsentativ für vergangene Signalprogramme einer Lichtsignalanlage sind. Aus den Historiendaten können Modelle in Form von Zustandsautomaten ermittelt werden, mittels derer ein zukünftiger Zustand einer Signalgruppe der Lichtsignalanlage prädiziert werden kann.

Die DE 10 2017 127 346 A1 beschreibt ein System, ein Verfahren und eine Vorrichtung zum Erkennen von Bremslichtern. Hierbei werden mittels Daten von einem Abstandssensor oder Kamerabilddaten eine Zone innerhalb eines Bildrahmens erkannt, die einem Fahrzeug entspricht. Tiefe neurale Netzwerke, die auf Bremslichter ausgebildet sind, klassifizieren ein Bremslicht des Fahrzeugs als an oder aus basierend auf Bilddaten in der Zone.

Die US 2018/0285664 A1 beschreibt ein Verfahren zum Identifizieren eines Signalzustands einer Signalanlage mit einer Ampel. Dabei wird mithilfe einer Kamera ein Bild von Ampeln aufgenommen, das dann bspw. auf einem Touchscreen angezeigt wird. Ein Benutzer wählt daraus eine Ampel aus, die zu beobachten ist. Ein Signalzustand der ausgewählten Ampel wird erfasst. Sobald die ausgewählte Ampel grün anzeigt, wird ein entsprechendes Signal ausgegeben. Ferner kann die Auswahl der Ampel auch automatisch erfolgen, indem ein Ergebnis eines Spurhalte- oder Spurwechselassistenten als Eingabe für ein Ampelerkennungssystem verwendet wird.

Die DE 10 2018 007 962 A1 beschreibt ein Verfahren zur Erkennung von Ampelpositionen. Dabei wird von einer Mehrzahl von Flottenfahrzeugen eine Verkehrsszene auf einer Ampelkreuzung mittels einer Kamera erfasst und in der erfassten Verkehrsszene Ampelkandidaten bestimmt und zu einem zentralen Backend hochgeladen. Dabei werden im jeweiligen Flottenfahrzeug geometrische Positionen der Ampelkandidaten untereinander bestimmt und zum Backend hochgeladen, wobei im Backend bei Vorliegen einer Mehrzahl hochgeladener geometrischer Positionen zur gleichen Verkehrsszene eine statistische Analyse dieser Mehrzahl hochgeladener geometrischer Positionen erfolgt, derart dass häufig auftretende Ampelkandidaten als Ampeln interpretiert werden, während selten auftretende Ampelkandidaten als Fehldetektion interpretiert werden. Aus den als Ampeln interpretierten geometrischen Positionen wird ein Pattern mit Konfidenzintervallen der Ampelpositionen erstellt und der jeweiligen Ampelkreuzung und einer bestimmten Fahrtrichtung zugeordnet wird.

Es liegt also die Herausforderung vor, dass nicht vom Fahrer, sondern mittels eines Verfahrens, einer Vorrichtung und/oder eines Computerprogramms erkannt wird, welche Informationen für eine automatische Fahrzeugfunktion relevant sind. Insbesondere bei einem Fahrzeug, das einen von einer Ampelanlage gesteuerten Fahrbahnabschnitt befährt und sich auf die Ampelanlage zubewegt, müssen die relevanten Ampelinformationen wie eine Position der Ampel auf dem Fahrweg des Fahrzeugs zuverlässig erfasst werden. Diese relevanten Ampelinformationen können dann auch als Eingabe für weitere Fahrfunktionen verwendet werden.

Aufgabe der vorliegenden Erfindung ist es, ein Verfahren, eine Vorrichtung und ein Computerprogramm bereitzustellen, die die oben genannte Herausforderung wenigstens teilweise bewältigen.

Diese Aufgabe wird durch ein Verfahren nach Anspruch 1, eine Vorrichtung nach Anspruch 11 und ein Computerprogramm nach Anspruch 12 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erster Aspekt der Offenbarung betrifft ein Verfahren zum Aufbereiten von Daten über eine einen Fahrbahnabschnitt steuernde Ampelanlage mit mindestens einer Ampel. Das Verfahren umfasst die folgenden Schritte:

- Abrufen von Ampelobjekten, die Ampelinformationen über die Ampelanlage repräsentieren;
- Erkennen von mindestens einem Cluster in den Ampelobjekten, wobei ein erkanntes Cluster eine entsprechende (Ampel) der mindestens einen Ampel der Ampelanlage repräsentiert;
- Zuordnen der Ampelobjekte zu dem mindestens einen Cluster; und
- Ableiten einer räumlichen Position der mindestens einen Ampel anhand der zugeordneten Ampelobjekte

Ampelinformationen über eine Ampelanlage werden von einer Erfassungseinrichtung erfasst, die beispielsweise an einem Fahrzeug angebracht ist. Mittels eines Schwarms von mit Erfassungseinrichtungen ausgestatteten Fahrzeugen kann somit eine Vielzahl von Ampelinformationen über dieselbe Ampelanlage erfasst werden. Diese Ampelinformationen werden durch Ampelobjekte repräsentiert. Die Ampelobjekte entsprechen Daten bzw. Datensätzen. Die Ampelobjekte können in einem Speicher/einer Datenbank gespeichert werden. Der Begriff "Ampel" wird für eine physikalische Ampel verwendet. Eine Ampelanlage umfasst mindestens eine Ampel.

Die Ampelinformationen über die Ampelanlage umfassen jedenfalls Positionsdaten der (mindestens einen) Ampel der Ampelanlage. Ergänzend können auch noch Ampelphasenverläufe der Ampel als Ampelinformation erfasst werden.

Eine Position der erfassten Ampel wird relativ zu dem sich auf dem Fahrbahnabschnitt befindlichen und sich auf die Ampelanlage zubewegenden Fahrzeug erfasst. Eine Position und somit die Bewegung des Fahrzeugs ist bspw. mittels eines Fahrzeugortbestimmungssystems, wie z.B. ein GPS-System, ermittelbar. So ist eine Position des Fahrzeugs an sich in einem globalen Koordinatensystem darstellbar. Somit ist die relativ zum Fahrzeug erfasste Ampelposition in eine absolute Ampelposition zu diesem globalen Koordinatensystem überführbar. Alternativ oder ergänzend zu dem globalen Koordinatensystem können ein in GPS-Systemen verwendetes Format oder ein verwendeter Ort, andere x-,y-,z-Koordinatensätze oder andere geeignete Ortsinformationen verwendet werden.

Insbesondere kann ein Ampelobjekt Daten über einen Positionsverlauf der erfassten Ampel umfassen. Dabei kann die Position relativ zu einem Fahrzeug mit der Erfassungseinrichtung erfasst werden. Der Positionsverlauf kann durch eine Vielzahl von Zeit-Position-Paaren darstellbar sein.

Ein Schritt umfasst das Erkennen von mindestens einem Cluster in den Ampelobjekten. Damit werden Ampelobjekte mit ähnlichen Eigenschaften erkannt und gruppiert. Vorliegend werden die Ampelobjekte hinsichtlich ihrer Ampelpositionsdaten geclustert. Jedes erkannte Cluster (Gruppe) repräsentiert eine entsprechende Ampel der Ampelanlage.

Die Ampelobjekte werden den erkannten Clustern zugeordnet. Mit anderen Worten, die Ampelobjekte werden mit einer Zusatzinformation versehen, so dass erkennbar ist, in welchem Cluster sie aufzufinden sind.

Die räumliche Position der mindestens einen Ampel kann mittels der zugeordneten Ampelobjekte abgeleitet werden. Anders ausgedrückt, aus einem erkannten Cluster lässt sich die räumliche Position derjenigen Ampel ableiten, die durch das erkannte Cluster repräsentiert wird. So werden die dem entsprechenden erkannten Cluster zugeordneten Ampelobjekte verwendet, um mittels der darin befindlichen Positionsdaten, die räumliche Position einer Ampel einer Ampelanlage zu ermitteln. Die räumliche Position ist die tatsächliche Position der (physikalischen) Ampel und ist in dem globalen Koordinatensystem darstellbar.

Somit lässt sich durch die Ampelobjekte ein virtuelles Abbild der Ampelanlage, ein sogenanntes Ampelbild, erzeugen. Dieses Ampelbild ist abspeicherbar, insbesondere in einer Datenbank. Das Ampelbild stellt also die räumliche Position der mindestens einen Ampel der Ampelanlage in absoluten Koordinaten in dem globalen Koordinatensystem dar. Das Ampelbild, das die Ampelanlage repräsentiert, kann als Eingangsinformation für verschiedene Fahrzeugfunktionen verwendet werden.

Erfindungsgemäß umfasst das Abrufen der Ampelobjekte ferner:

- Abrufen eines Verlaufs des Fahrbahnabschnitts;
- Abrufen einer Ampellinie, die eine Position der Ampelanlage entlang des Fahrbahnabschnitts angibt; und
- Verwerfen der Ampelobjekte, deren Abstand zur Ampellinie einen vorbestimmten Grenzabstand überschreiten.

Der Verlauf des Fahrbahnabschnitts kann beispielsweise durch die oben genannte fahrzeugseitige Erfassungseinrichtung erfasst werden und insbesondere aus einem Fahrbahnverlauf des Fahrzeugs abgeleitet werden. Dieser Fahrbahnverlauf kann durch eine Vielzahl von Zeit-Position-Paaren dargestellt werden, wobei hier die Position des Fahrzeugs in dem globalen Koordinatensystem gemeint ist. Bei einer Vielzahl von Fahrzeugen werden eine Vielzahl von Fahrbahnverläufen erfasst. Der Verlauf des Fahrbahnabschnitts kann aus dem Mittel der Vielzahl von Fahrbahnverläufen abgeleitet werden. Insbesondere kann der Verlauf des Fahrbahnabschnitts einer Längsachse des Verlaufs des Fahrbahnabschnitts entsprechen. Mit Fahrtrichtung des Fahrbahnabschnitts ist diejenige Richtung gemeint, in die sich das Fahrzeug auf die (den Fahrbahnabschnitt steuernde) Ampelanlage zubewegt.

Allgemein ist die Ampellinie die Position entlang des Verlaufs des Fahrbahnabschnitts, an der ein Fahrzeug an der Ampelanlage vorbeifährt. Im oben erwähnten globalen Koordinatensystem kann die Ampellinie als eine zur Längsachse des Verlaufs des Fahrbahnabschnitts senkrechte Gerade verstanden werden.

Die Ampellinie kann derjenigen Position entlang des Verlaufs des Fahrbahnabschnitts entsprechen, an der sich in Fahrtrichtung des Fahrbahnabschnitts zum ersten Mal ein Ampelobjekt von den oben genannten Ampelobjekten befindet. Mit anderen Worten, die Ampellinie befindet sich entlang dem Fahrbahnabschnitt an der Position, an der das Fahrzeug erstmalig an einem Ampelobjekt vorbeifährt. Insbesondere kann also die Ampellinie also überfahrtsspezifisch (und somit auch fahrzeugspezifisch) ermittelt werden.

Der Abstand eines Ampelobjekts zur Ampellinie ist (aus einer Vogelperspektive auf den Fahrbahnabschnitt gesehen) die kürzeste Strecke zwischen der Ampellinie und dem Ampelobjekt. Anders ausgedrückt, der Abstand eines Ampelobjekts zur Ampellinie ist die kürzeste Strecke zwischen dem Ampelobjekt und einer Ampellinienebene, wobei die Ampellinie in der Ampellinienebene liegt und die Ampellinienebene zur Längsachse des Fahrbahnabschnitts senkrecht angeordnet ist.

Indem die Ampelobjekte gemäß der obigen Bedingung verworfen werden, können solche Ampelobjekte herausgefiltert werden, die mit hoher Wahrscheinlichkeit Fußgängerampeln und/oder Ampeln für einen anderen Fahrbahnabschnitt repräsentieren. Durch diese "Vorfilterung" können Ampeln bzw. Ampelobjekte für den von der Ampelanlage gesteuerten Fahrbahnabschnitt zuverlässiger ermittelt werden.

Ferner kann der vorbestimmte Grenzabstand von einer Standardabweichung von einem Median(wert) aller Abstände der Ampelobjekte zur Ampellinie der Ampelanlage abhängig sein. Anstatt einer festen Grenze kann der vorbestimmte Grenzabstand also abhängig von der dieser Standardabweichung sein. Durch so eine "Vorfilterung" wird eine folgende Auswertung der Ampeldaten unabhängig von einer Streuung der Ampelobjekte in Längsrichtung des Fahrbahnabschnittsverlaufs (an der Ampellinie). Insbesondere wird durch diese "Vorfilterung" die Streuung herausgerechnet.

Erfindungsgemäß sind die Ampelobjekte mittels einer Punktwolke in dem oben erwähnten Koordinatensystem darstellbar. Anders ausgedrückt, die durch die Ampelobjekte repräsentierten Ampelpositionen können durch entsprechende Koordinaten(-punkte) in dem globalen Koordinatensystem, sogenannte "Ampelobjektpunkte", darstellbar sein. So sind die Ampelobjekte in Form von Ampelobjektpunkten besonders gut (weiter-) verarbeitbar. Insbesondere lassen sich somit mathematische Operationen auf die Ampelobjekte anwenden.

In einer Variante kann das Erkennen des mindestens einen Clusters ferner umfassen:

- Projizieren der Punktwolke auf eine Ebene, die den Fahrbahnabschnitt an der Ampellinie senkrecht schneidet; und
- Erkennen des mindestens einen Clusters von Ampelobjekten mittels der projizierten Punktwolke.

Die Ebene, auf die die Punktwolke projiziert wird, entspricht der oben beschriebenen Ampellinienebene. Die daraus resultierenden projizierten Punkte werden geclustert.

In eine Alternative kann das Erkennen des mindestens einen Clusters in den Ampelobjekten ferner umfassen:

- Verwerfen von jedem Cluster, dessen Anzahl an Ampelobjekten kleiner ist als eine vorbestimmte Mindestanzahl.

Wenn die Ampelobjekte durch entsprechende Ampelobjektpunkte dargestellt werden, wird demnach jedes Cluster verworfen, dessen Anzahl an Ampelobjektpunkten kleiner ist als die vorbestimmte Mindestanzahl.

Wenn mehrere Cluster erkannt wurden, so kann die vorbestimmte Mindestanzahl an Ampelobjekten in Abhängigkeit der Anzahl der Ampelobjekte in dem zweitgrößten Cluster sein. Insbesondere kann die vorbestimmte Mindestanzahl ein Fünftel der Anzahl der Ampelobjekte in dem zweitgrößten Cluster sein. Dadurch wird sichergestellt, dass solche Cluster herausgefiltert werden, die aus verstreuten Ampelobjekten gebildet werden und somit keiner physikalischen Ampel entsprechen.

Ferner kann das Erkennen des mindestens einen Clusters in den Ampelobjekten umfassen:

- Durchführen einer Hauptkomponentenanalyse auf das mindestens eine Cluster; und wenn ein Eigenwert des mindestens einen Clusters einen vorbestimmten Grenzeigenwert überschreitet:
- Erkennen von mindestens einem Sub-Cluster in den Ampelobjekten des mindestens einen Clusters, wobei jedes erkannte Sub-Cluster eine entsprechende (Ampel) der mindestens einen Ampel der Ampelanlage repräsentiert.

Die Hauptkomponentenanalyse ist ein Verfahren der multivariaten Statistik. Sie dient zur Strukturierung, Vereinfachung und Veranschaulichung umfangreicher Datensätze, indem eine Vielzahl statistischer Variablen durch eine geringere Zahl möglichst aussagekräftiger Linearkombinationen (Hauptkomponenten) genähert wird.

Die Hauptkomponentenanalyse wird auf jedes Cluster angewendet, das in den Ampelobjekten erkannt wird. Insbesondere wird die Hauptkomponentenanalyse auf die in den jeweiligen Clustern befindlichen Ampelobjekte (Ampelobjektpunkte) angewendet. Dadurch kann erkannt werden, ob zwei dicht aneinander angeordnete Ampeln (bzw. die Ampelobjekte, die diese zwei dicht zueinander angeordneten Ampeln repräsentieren) in ein einziges Cluster zusammengefasst werden.

Aus den Ampelobjekten bzw. Ampelobjektpunkten können die Hauptkomponenten der entsprechenden Cluster berechnet und die Eigenwerte der entsprechenden Cluster ermittelt werden. Diejenigen Cluster, die einen vorbestimmten Grenzeigenwert überschreiten, werden als "Doppelcluster" identifiziert, die zwei dicht zueinander angeordnete Ampeln repräsentieren. Mittels geeigneter Verfahren/Algorithmen, bspw. einem Clusteringverfahren, können aus den Ampelobjekten, die einem solchen Doppelcluster zugehören, Sub-Cluster erkannt werden. Diese Sub-Cluster eines Doppelclusters repräsentieren eine entsprechende Ampel der Ampelanlage. Ergänzend können Ampelobjekte von einem Doppelcluster, die keinem Sub-Cluster zuordenbar sind, verworfen werden.

Mittels der Hauptkomponentenanalyse und des Erkennens von Sub-Clustern in den Doppelclustern können somit dicht zueinander angeordnete Ampeln zuverlässig abgeleitet und auseinandergehalten werden

In einer Alternative kann das Ableiten der räumlichen Position der mindestens einen Ampel umfassen:

- Bilden eines räumlichen Mittelwerts über die Ampelobjekte, die dem Cluster zugeordnet sind, das die mindestens eine Ampel repräsentiert.

Es können also die in den Ampelobjekten hinterlegten Ampelpositionsdaten herangezogen werden. Der Mittelwert aller Ampelpositionsdaten eines Clusters stellt die räumliche Position der durch das entsprechende Cluster repräsentierten Ampel (innerhalb des globalen Koordinatensystems) dar. Die Gesamtheit aller räumlichen Positionen aller Ampeln einer Ampelanlage ist das Ampelbild für diese Ampelanlage.

In einer Alternative kann das Erkennen des mindestens einen Clusters mittels eines ersten Clusteringverfahrens und/oder das Erkennen des mindestens einen Sub-Clusters mittels eines zweiten Clusteringverfahrens erfolgen. Hierbei können verschiedene Clusteringverfahren verwendet werden. Es können aber auch gleiche Clusteringverfahren verwendet werden, die unterschiedliche Verfahrensparameter aufweisen.

In der Regel wird der bekannte Algorithmus *"Density-Based Spatial Clustering of Applications with Noise"* (DBSCAN) verwendet. Dieser Algorithmus arbeitet dichtebasiert und kann mehrere Cluster erkennen. Rauschpunkte (*noise*) werden dabei ignoriert und separat zurückgeliefert. Der Algorithmus bildet Cluster von sogenannten "dichteverbundenen" Punkten, d.h. von Punkten die sich nicht weiter als eine vorgegebene Distanz (Nachbarschaftslänge) von einem "Kernpunkt" im selben Cluster befinden. Ein Kernpunkt ist ein Punkt, der näher als die Nachbarschaftslänge zu mindestens einer vorbestimmten Mindestanzahl weiterer Kernpunkte im selben Cluster liegt.

Beispielsweise kann das Erkennen des mindestens einen Clusters mittels eines ersten Clusteringverfahrens und das Erkennen des mindestens einen Sub-Clusters mittels des DBSCAN-Algorithmus erfolgen. Hierbei können dann verschiedene Nachbarschaftslängen für die Clusteringverfahren verwendet werden.

Es sind auch andere Clusteringverfahren möglich, z.B. entsprechend trainierte (tiefe) neuronale Netzwerke.

In einer Alternative kann mindestens eines von dem ersten und dem zweiten Clusteringverfahren den DBSCAN-Algorithmus umfassen.

Ferner kann eine Nachbarschaftslänge des ersten Clusteringverfahrens größer sein als eine Nachbarschaftslänge des zweiten Clusteringverfahrens. Dies setzt voraus, dass das erste und das zweite Clusteringverfahren den DBSCAN-Algorithmus umfassen.

Ferner werden die Ampelobjekte von einer Vielzahl von Fahrzeugen erfasst.

Erfindungsgemäß werden die Ampelinformationen von Erfassungseinrichtungen erfasst, die an einer Vielzahl von Fahrzeugen angebracht sind. Indem der Fahrbahnabschnitt befahren und die Ampelanlage von einer Vielzahl von Fahrzeugen überfahren wird, können mehr Informationen über die Ampelanlage gesammelt werden. Mit jeder (aufeinanderfolgenden) Überfahrt lässt sich somit eine präzisere Auswertung der Ampeldaten durchführen.

In einer Alternative können die Ampelobjekte überfahrtsspezifisch erfasst werden. Dabei ist mit Überfahrt gemeint, dass ein Fahrzeug aus der Vielfalt von Fahrzeugen sich auf dem von der Ampelanlage gesteuerten Fahrbahnabschnitts bewegt und sich auf die Ampelanlage zubewegt und diese überquert. Während dieser Überfahrt erfasst, insbesondere kontinuierlich, das Fahrzeug mittels seiner Erfassungseinrichtung die Ampelanlage.

Ein zweiter Aspekt der Offenbarung betrifft eine Vorrichtung zum Aufbereiten von Daten einer Ampelanlage, wobei die Vorrichtung ausgebildet und eingerichtet ist, eines der oben beschriebenen Verfahren auszuführen.

Ein dritter Aspekt der vorliegenden Offenbarung betrifft ein Computerprogramm zum Aufbereiten von Daten einer Ampelanlage, wobei das Computerprogramm ausgebildet ist, bei seiner Ausführung eine Datenverarbeitungsvorrichtung zu veranlassen, eines der oben beschriebenen Verfahren auszuführen.

Ausführungsbeispiele der Erfindung werden nun beispielhaft und unter Bezugnahme auf die beigefügten Zeichnungen beschrieben. Dabei zeigt:

Fig. 1    schematisch einen durch eine Ampelanlage gesteuerten Fahrbahnabschnitt;
Fig. 2    schematisch ein Verfahren zum Aufbereiten von Daten über die Ampelanlage;
Fig. 3    schematisch ein Ampelbild der in Fig. 1 gezeigten Ampelanlage;
Fig. 4    schematisch ein beispielhaftes Ampelbild der in Fig. 1 gezeigten Ampelanlage;
Fig. 5    schematisch ein Verfahren zur Gruppierung von Ampeln der in Fig. 1 gezeigten Ampelanlage;
Fig. 6    schematisch ein Verfahren zum Bestimmen einer Ampelphase einer Ampel; und
Fig. 7    schematisch und beispielhaft zwei Phasenverläufe.

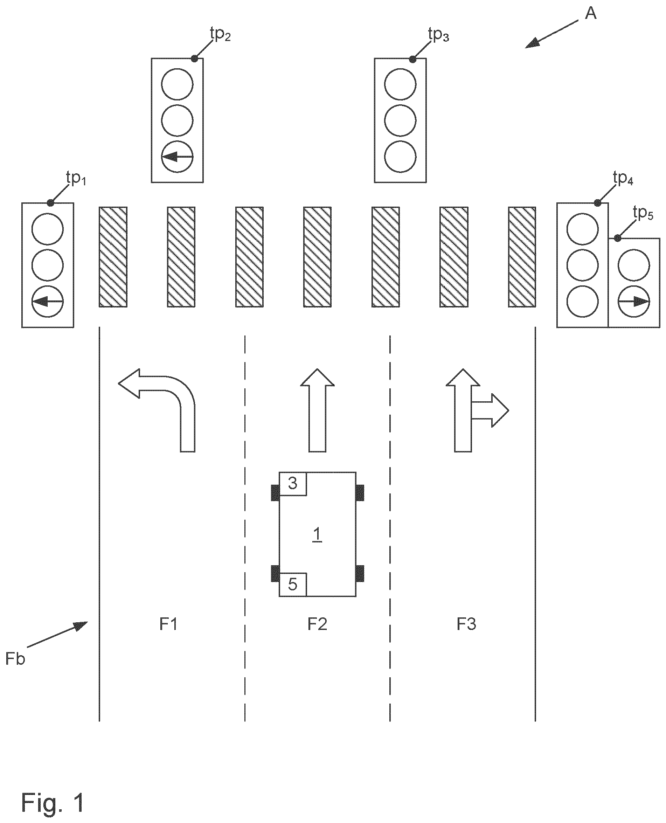

In Fig. 1 ist schematisch ein Fahrbahnabschnitt Fb dargestellt, der von einer Ampelanlage A gesteuert wird. Der Fahrbahnabschnitt Fb weist drei Fahrspuren F1, F2, F3 auf, die wiederum durch vier entsprechende Ampeln $tp_1$, $tp_2$, $tp_3$, $tp_4$, $tp_5$ der Ampelanlage A gesteuert werden. Die Ampelanlage A kann durch ein den Fahrbahnabschnitt Fb befahrendes Fahrzeug 1 erfasst werden. Dabei werden insbesondere die einzelnen Ampeln $tp_1$-$tp_5$ der Ampelanlage A erfasst. Zur Erfassung weist das Fahrzeug 1 eine Erfassungseinrichtung 3 auf, das derart ausgebildet ist, einen Phasenverlauf und/oder Position jeder Ampel $tp_1$-$tp_5$ zu erfassen. Ferner kann die Erfassungseinrichtung 3 mindestens eines aus Position, Positionsverlauf und Ausrichtung des Fahrzeugs 1 erfassen. Die Erfassungseinrichtung 3 kann bspw. eine Kameraeinrichtung und eine GPS-Einrichtung umfassen. Das Fahrzeug 1 weist eine Funkschnittstelle 5 auf, um mit einem Server/einer Datenbank (nicht gezeigt) zu kommunizieren und Daten auszutauschen. Im Rahmen der Offenbarung bedeutet "Erfassen durch das Fahrzeug 1" ebenfalls "Erfassen durch die fahrzeugseitige Erfassungseinrichtung 3".

Ein Phasenverlauf einer Ampel wird auch als Signalverlauf bezeichnet. Ein Phasenverlauf gibt Phasendauern sowie entsprechenden Ampelphasen an. Ein Phasenverlauf für eine Ampel ist als eine Vielzahl von Zeit-Ampelphase-Paaren darstellbar. Eine Ampelphase ist ein Signal, die eine Ampel anzeigen kann. In der Regel weist eine Ampel die (Ampel-)Phasen "grün", "gelb", "rot" und "gelb und rot" auf, wobei in der Regel die Ampelphasen auch in dieser Reihenfolge von der Ampel angezeigt werden. Andere Reihenfolgen sind auch möglich.

Es versteht sich, dass das Fahrzeug 1 auch beispielhaft für eine Vielzahl von Fahrzeugen stehen kann, so dass die Ampelanlage A von einer Vielzahl von Fahrzeugen erfassbar ist. So ist für jede Überfahrt über die Ampelanlage A durch ein Fahrzeug 1 aus der Vielzahl von Fahrzeugen ein fahrzeugspezifischer, oder anders genannt überfahrtsspezifischer, Datensatz erstellbar. Dieser überfahrtspezifische Datensatz wird später beschrieben.

Bei der vorliegenden Ampelanlage A steuern die Ampeln $tp_1, tp_2$ die Fahrspur F1 und die Ampeln $tp_3, tp_4$ die Fahrspuren F2, F3. Somit bilden die Ampeln $tp_1, tp_2$ eine erste Ampelgruppe und die Ampeln $tp_3, tp_4$ eine zweite Ampelgruppe. Die Ampeln $tp_1, tp_2$ der ersten Ampelgruppe weisen also einen gleichen ersten Phasenverlauf auf und die Ampeln $tp_3, tp_4$ der zweiten Ampelgruppen einen gleichen zweiten Phasenverlauf. Mit anderen Worten, die jeweiligen Ampeln der Ampelgruppen weisen einen gleichen Phasenverlauf auf. Schließlich kann die Fahrspur F3 zusätzlich durch eine separate Rechtsabbiegerampel $tp_5$ gesteuert sein.

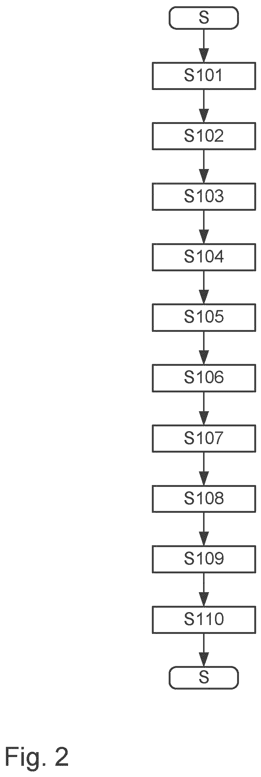

In der Figur 2 ist ein Verfahren zur Erstellung eines Ampelbildes 7 dargestellt. Mit Ampelbild 7 ist ein Datensatz gemeint, der beispielsweise in einer Datenbank hinterlegt sein kann und Positionen von Ampeln einer Ampelanlage, bspw. der in Figur 1 gezeigten Ampelanlage A mit den Ampeln $tp_1$-$tp_5$ umfassen. Mit anderen Worten, die Position einer Ampelanlage, und insbesondere deren Ampeln, kann mittels eines Ampelbilds dargestellt/repräsentiert werden.

In einem Schritt S101 werden Ampelinformationen, sog. Ampelobjekte, $n_c$ abgerufen, z.B. aus einer bereits bestehenden Datenbank. Jedes Ampelobjekt $n_c$ ist repräsentativ für eine entsprechende Ampel der Ampeln $tp_1$-$tp_5$ und umfasst daher zumindest Positionsdaten der entsprechenden Ampel. Ferner umfassen die Ampelobjekte $n_c$ auch Informationen über die Ampelphasenverläufe der entsprechenden Ampeln.

Jedes Ampelobjekt $n_c$ wird überfahrspezifisch erstellt. Hierbei bedeutet "Überfahrt", dass das Fahrzeug 1 aus der Vielzahl von Fahrzeugen den Fahrbahnabschnitt Fb befährt, auf die Ampelanlage A zuführt und die Ampelanlage A dann überquert. Während so einer Überfahrt c erfasst das Fahrzeug 1 mittels der Erfassungseinrichtung 3, insbesondere kontinuierlich, die Positionen und die Phasenverläufe der einzelnen Ampeln $tp_1$-$tp_5$.

Jedes der Ampelobjekte $n_c$, im Speziellen die dadurch repräsentierte Ampelposition der entsprechenden Ampeln $tp_1$-$tp_5$, kann beispielsweise als Punkt (Ampelobjektpunkt) $p_n$ in einem globalen Koordinatensystem dargestellt werden. Die Gesamtheit aller Ampelobjekte $n_c$ ist also als eine Punktwolke $\{p_n\}$ mit n=1....N in einem globalen Koordinatensystem K darstellbar.

Für das in Figur 2 dargestellte Verfahren können die Begriffe "Ampelobjekte" und "Ampelobjektpunkte" austauschbar verwendet werden, da die Ampelobjektpunkte einer Darstellung der Ampelobjekte in dem globalen Koordinatensystem K entsprechen.

Es ist möglich, die Ampelobjektpunkte in einem "semi-globalen" Koordinatensystem darzustellen, das für einen vorbestimmten Bereich um einen gegebenen Referenzpunkt (Ursprung des "semi-globalen" Koordinatensystems) gültig ist. Dabei kann sich der vorbestimmte Bereich auch mehrere hundert Meter von dem Referenzpunkt in alle möglichen Richtungen erstrecken, insbesondere in Richtung Osten, Norden und oben (von der Erdoberfläche weg).

Die Ampelobjektpunkte $p_n$ können eine unerwünscht hohe Streuung in einer Längsrichtung entlang eines Verlaufs des Fahrbahnabschnitts Fb aufweisen. Daher können die Ampelobjektpunkte $p_n$ zur Erstellung des Ampelbilds vorgefiltert werden. Diese Vorfilterung wird im Folgenden beschrieben.

In einem Schritt S102 wird ein Verlauf $d_{traj}$ des Fahrbahnabschnitts Fb abgerufen. Das ist der Straßenverlauf, der auf die Ampelanlage A zuführt. Dazu können Bewegungshistoriendaten $r_{traj}$ des Fahrzeugs 1 abgerufen werden, die mindestens eines aus der Position, dem Positionsverlauf und der Ausrichtung des Fahrzeugs 1 repräsentieren. Mit anderen Worten, der Verlauf $d_{traj}$ des Fahrbahnschnitts Fb ist aus den Bewegungshistoriendaten $r_{traj}$ ermittelbar. Hierbei kann der Verlauf $d_{traj}$ des Fahrbahnschnitts Fb auch repräsentativ für eine Ausrichtung des Fahrzeugs 1 sein.

Der Verlauf $r_{traj}$ des Fahrbahnabschnitts Fb wird, wie die Ampelobjekte $n_c$ auch, in dem globalen Koordinatensystem K dargestellt.

Es ist möglich, dass der Schritt S101 vor, nach oder gleichzeitig mit dem Schritt S102 erfolgt.

In einem Schritt S103 werden die Ampelobjektpunkte $p_n$ auf eine Längsrichtung $d_{traj\_intersec}$ des Verlaufs $d_{traj}$ des Fahrbahnabschnitts Fb projiziert, wobei die Längsrichtung $d_{traj\_intersec}$ den Verlauf $d_{traj}$ des Fahrbahnabschnitts Fb auf der Ampellinie darstellt. Die Ampellinie ist diejenige Position entlang Verlaufs des Fahrbahnabschnitts Fb, an der sich die Ampelanlage A befindet. Dies kann bspw. diejenige Position entlang des Verlaufs $d_{traj}$ des Fahrbahnabschnitts sein, an der (in Fahrtrichtung des Fahrzeugs 1) das Fahrzeug erstmals an einem Ampelobjekt $n_c$ bzw. Ampelpunkt $p_n$ vorbeifährt. Insbesondere kann also die Ampellinie also überfahrtsspezifisch (und somit auch fahrzeugspezifisch) ermittelt werden. Für das hier beschriebene Verfahren kann auch eine überfahrtsübergreifende Ampellinie gebildet werden, indem das Mittel über die Ampellinien aus jeder Überfahrt gebildet wird. In dem Schritt S103 wird also auch die Ampellinie ermittelt/abgerufen.

Da die Ampelobjektpunkte $p_n$ und der Verlauf $d_{traj}$ des Fahrbahnabschnitts Fb in dem Koordinatensystem K (als Vektoren) darstellbar sind, erfolgt die Projizierung für jedes Ampelobjekt $p_n$ gemäß folgender Formel:

$$x'_{p_n} = \vec{p}_n^{\;T}\; \vec{d}_{traj\_intersec}$$

In einem Schritt S104 werden diejenigen Ampelobjektpunkte $p_n$ verworfen, die in der Längsrichtung $d_{traj\_intersec}$ weiter als zwei Standardabweichungen $\sigma_{x'_{pn}}$ von dem Medianwert über allen projizierten Ampelobjektpunkte $\{x'_{p_n}\}$ liegen Es werden also die projizierten Ampelobjektpunkte $\{x'_{p_n}\}$ verworfen, die folgende Bedingungen erfüllen:

$$x'_{p_n} > \underset{n}{\mathrm{median}} \left\{x'_{p_n}\right\} + 2\sigma_{x'_{p_n}}$$

Mit anderen Worten, es werden Ampelobjektpunkte $p_n$ unter Berücksichtigung einer Streuung (in Längsrichtung) aller Ampelobjektpunkte $\{p_n\}$ aussortiert. Alternativ ist es auch möglich, einen vorbestimmten Grenzwert vorzusehen, der insbesondere nicht von der Standardabweichung $\sigma_{x'_{pn}}$ abhängig ist. Dieser vorbestimmte Grenzwert kann bspw. ein fester (absoluter) Wert sein.

Die verworfenen Ampelobjektpunkte $p_n$ repräsentieren mit hoher Wahrscheinlichkeit Ampeln, die nicht auf der für den Fahrbahnabschnitt Fb gültigen Ampellinie der Ampelanlage A liegen, wie z.B. Fußgängerampeln, Ampeln für Fahrbahnabschnitte von anderen Richtungen)

Die Schritte S102, S103 und S104 stellen das oben erwähnte Vorfiltern der Ampelobjektpunkte $p_n$ dar.

Ferner werden die nach der Vorfilterung übrig gebliebenen Ampelobjekte $p_n$ mittels eines Clusteringverfahrens in Gruppen unterteilt. Hierbei ist unter einem Clusteringverfahren ein Verfahren zur Entdeckung von Ähnlichkeitsstrukturen in (großen) Datenbeständen, wie den hier vorliegenden Ampelobjekten $p_n$, gemeint. Die durch das Clusteringverfahren gefundenen Gruppen von "ähnlichen" Objekten werden Cluster genannt.

In einem Schritt S105 werden die Ampelobjektpunkte $p_n$ auf eine Bildebene E projiziert, die senkrecht zum Verlauf $d_{traj}$ des Fahrbahnabschnitts Fb auf Höhe der Ampellinie ist. Mit anderen Worten, die Bildebene E ist diejenige Ebene, die sich senkrecht zur Fahrtrichtung des Fahrzeugs 1 und entlang des Verlaufs $d_{traj}$ des Fahrbahnabschnitts Fb auf Höhe der Ampellinie befindet.

Zur Projektion auf die Bildebene E wird jeder Ampelobjektpunkt auf eine Querrichtung $d_{traj\_intersec}^{\perp}$ des Verlaufs $d_{traj}$ des Fahrbahnabschnitts Fb projiziert, wobei die Querrichtung $d_{traj\_intersec}^{\perp}$ des Verlaufs $d_{traj}$ des Fahrbahnabschnitts Fb auf der Ampellinie darstellt und in einer Ebene des Fahrbahnabschnitts Fb liegt. Höhen der Ampeln $tp_1$-$tp_5$ werden ebenfalls durch die Ampelobjektpunkte $p_n$ repräsentiert und können (ohne in eine Richtung projiziert zu werden) übernommen werden. Demnach lässt sich jedes auf die Bildebene E projizierte Ampelobjekt $p'_n$ wie folgt durch einen 2D-Vektor des Koordinatensystems K darstellen:

$$\vec{p}'_n = \begin{bmatrix} \vec{p}_n^{\;T} \vec{d}_{traj\_intersec} \\ \vec{p}_n^{\;T} \vec{k} \end{bmatrix}$$

Hier ist $\vec{k}$ der kanonische Basisvektor des Koordinatensystems K.

In einem Schritt S106 wird ein (erstes) Clusteringverfahren auf die in Fahrtrichtung projizierten Ampelobjektpunkte $p'_n$ ausgeführt. So können die in Fahrtrichtung projizierten **Ampelobjektpunkte** $p'_n$ gruppiert werden, um Ampelgruppen zu erkennen/ermitteln. Die Ampelobjektpunkte $p'_n$ werden hinsichtlich ihrer Position(-daten) geclustert.

Hierbei können verschiedene Clusterverfahren verwendet werden. In der Regel wird der bekannte Algorithmus *"Density-Based Spatial Clustering of Applications with Noise"* (DBSCAN) verwendet. Dieser Algorithmus arbeitet dichtebasiert und kann mehrere Cluster erkennen. Rauschpunkte (noise) werden dabei ignoriert und separat zurückgeliefert.

Der Algorithmus bildet Cluster von sogenannten "dichte-verbundenen" Punkten, d.h. von Punkten die sich nicht weiter als eine vorgegebene Distanz (Nachbarschaftslänge) von einem "Kernpunkt" im selben Cluster t befinden. Ein Kernpunkt ist ein Punkt, der näher als die Nachbarschaftslänge $\varepsilon$ zu mindestens einer vorbestimmten Mindestanzahl minPts weiterer Kernpunkte im selben Cluster t liegt.

Für das vorliegende Verfahren beträgt eine Nachbarschaftslänge $\varepsilon_1$ zwei Meter und die vorbestimmte Mindestanzahl minPts = 3. Vorliegend ist eine vergleichsweise hohe Nachbarschaftslänge $\varepsilon_1$ =2m gewählt, um der vergleichsweisen hohen Streuung in den Ampelobjekten $p'_n$, insbesondere hinsichtlich ihrer Positionen (in dem Koordinatensystem), entgegenzuwirken.

Es sind auch andere Werte möglich, um das Clusteringverfahren an verschiedene Umstände anzupassen.

Das Ergebnis des Clusteringverfahrens aus Schritt S106 sind Cluster t mit t=1...T aus den in Fahrtrichtung projizierten Ampelobjektpunkten $p'_n$. Jedes dieser Cluster t stellt eine Ampelobjektgruppe dar, die repräsentativ für eine "physikalische" Ampel $tp_1$-$tp_5$ ist.

In einem Schritt S107 werden die einem Ampelcluster t, also einer Ampel t, zugehörigen Ampelobjekte mit dem entsprechenden Index t referenziert, so dass sich jeder projizierter Ampelobjektpunkt mit $p'_{n_{c,t}}$ angeben lässt. Die projizierten Ampelobjektpunkt $p'_{n_{c,t}}$ sind also entsprechenden Ampelcluster t und entsprechenden Überfahrten c zuordenbar.

Es sei angemerkt, dass eine Ampelgruppe t mehr als ein Ampelobjekt (und somit eine Ampelposition) umfassen kann, das seinen Ursprung bzw. die ihren Ursprung in derselben Überfahrt c haben kann. Grund dafür ist, dass eine Doppelerkennung durch die Erfassungseinrichtung 3 möglich ist, wobei diese Ampelobjekte zumindest teilweise zeitüberlappend oder nicht zeitüberlappend vorliegen.

In einem Schritt S108 werden die Ergebnisse des ersten Clusteringverfahrens nachgefiltert.

Hierfür werden Ampelobjektpunkte $p'_n$, die keiner Ampelgruppe t zuordenbar sind und somit ein Rauschen darstellen, verworfen.

Alternativ oder ergänzend werden im Schritt S108 Ampelcluster t mit einer Anzahl an Ampelobjektpunkte $p'_n$, die kleiner ist als eine vorbestimmte Mindestanzahl, bspw. ein Fünftel der Anzahl des zweitgrößten Ampelcluster, verworfen. Die Ampelobjektpunkte $p'_n$ der betreffenden Ampelcluster t werden ebenfalls verworfen. Dadurch wird sichergestellt, dass für das weitere Verfahren keine Ampelcluster t berücksichtigt werden, die aus verstreuten und keiner physikalischen Ampel t entsprechenden Ampelobjektpunkten $p'_n$ gebildet sind.

Alternativ oder ergänzend wird im Schritt S108 eine Hauptkomponentenanalyse für jedes Ampelcluster t durchgeführt.

Aufgrund der vergleichsweisen hohen ersten Nachbarschaftslänge $\varepsilon_1$=2m kann es dazu kommen, dass zwei dicht nebeneinanderliegende Ampeln t, durch das Clusteringverfahren zu einem Cluster t zusammengefasst werden. Dadurch werden die zwei dicht nebeneinanderliegenden Ampeln t nicht als solche erkannt, sondern nur durch ein Ampelcluster t und somit nur als eine Ampel t dargestellt. So ein Ampelcluster t kann mittels der Hauptkomponentenanalyse ermittelt werden.

Die Hauptkomponentenanalyse ist ein Verfahren der multivariaten Statistik. Sie dient zur Strukturierung, Vereinfachung und Veranschaulichung umfangreicher Datensätze, indem eine Vielzahl statistischer Variablen durch eine geringere Zahl möglichst aussagekräftiger Linearkombinationen (Hauptkomponenten) genähert wird.

Für die Hauptkomponentenanalyse eines Ampelcluster t werden alle dem entsprechenden Ampelcluster t zugehörigen Ampelobjektpunkte $p'_{n_t}$ ermittelt. Dafür kann folgende Formel verwendet werden:

$$\{p'_{n_t}\} = \bigcup_{c=1}^{C} \{p'_{n_{c,t}}\}$$

In der obigen Formel steht c für die entsprechende Überfahrt aus c=1... C.

Von dieser Ampelobjektpunktwolke $\{p'_{n_t}\}$ werden mittels der Hauptkomponentenanalyse die Hauptkomponenten (Hauptrichtungen) sowie die entsprechenden (maximalen) Eigenwerte $\lambda_{max_t}$ ermittelt. Ein Eigenwert $\lambda_{max_t}$ entspricht der Länge einer entsprechenden Hauptkomponente. Mittels der Hauptkomponentenanalyse wird also ermittelt, wie weit "auseinandergezogen" ein Ampelcluster t ist.

Dadurch können diejenigen Ampelcluster als "Doppelcluster" identifiziert werden, deren Hauptkomponente länger ist als ein vorbestimmter Wert. Mit anderen Worten, Doppelcluster liegen vor, wenn Eigenwerte $\lambda_{max_t}$ des Doppelclusters einen vorbestimmten Eigenwert-Grenzwert überschreiten.

Vorliegend kann der vorbestimmte Eigenwert-Grenzwert der zweifache Medianwert von allen Eigenwerten $\lambda_{max_t}$ über alle Ampelcluster t sein. Zur Identifizierung der Doppelcluster kann also folgende Bedingung gelten:

$$\lambda_{max_t} > 2 \underset{t}{median} \{\lambda_{max_t}\}$$

Es ist auch möglich, andere vorbestimmte Eigenwert-Grenzwerte zu verwenden. Beispielsweise kann der vorbestimmte Eigenwert-Grenzwert ein anderer Faktor des Medianwerts der Eigenwerte $\lambda_{max_t}$ über alle Ampelcluster sein als der obige zweifache Faktor.

Auf die identifizierten Doppelcluster wird nochmal das Clusteringverfahren (zweites Clusteringverfahren) angewendet. Insbesondere wird hierbei wieder der DBSCAN-Algorithmus angewendet, jedoch mit einer Nachbarschaftslänge $\varepsilon_2$, die der Hälfte der ersten Nachbarschaftslänge $\varepsilon_1$ des ersten Clusteringverfahrens entspricht. Vorliegend beträgt

die Nachbarschaftslänge $\varepsilon_2$ =1m. Die Nachbarschaftslänge $\varepsilon_2$ des zweiten Clusteringverfahrens kann auch einen anderen Wert aufweisen, solange dieser niedriger ist als die erste Nachbarschaftslänge $\varepsilon_1$. Maßgeblich ist dabei, dass das zweite Clusteringverfahren innerhalb der Doppelcluster wiederum "Sub-Cluster" erkennt.

Die entstehenden "Sub-Cluster" werden als Ampelcluster t behandelt. Aus dem DBSCAN-Algorithmus mit der Nachbarschaftslänge $\varepsilon_2$ des zweiten Clusteringverfahrens entstehende Ampelobjektpunkte $\{p'_n\}$, die keinem "Sub-Cluster" zuordenbar sind, werden verworfen.

In einem Schritt S109 werden alle überfahrtsspezifischen Datensätze, die nach den obigen Schritten weniger als eine vorbestimmte Mindestanzahl an Ampelobjekten aufweisen, verworfen. Es wird also geprüft, ob es nach den vorherigen Schritten dazu kommen kann, dass von einer Überfahrt c nur noch eine vorbestimmte Mindestanzahl an Ampelobjekten vorliegt.

Hier beträgt diese vorbestimmte Mindestanzahl zwei. In anderen Ausführungen ist auch eine andere vorbestimmte Mindestanzahl an Ampelobjekten möglich. Maßgeblich ist, das diese Mindestanzahl derart gewählt wird, dass sichergestellt wird, dass eine zuverlässige Zuordnung der Ampelobjektpunkte $p'_{n_t}$ zu den Ampelclustern t erfolgen kann.

Falls ein Ampelcluster t durch den Schritt S109 keine Ampelobjekte mehr aufweist, werden diese "leeren" Ampelcluster ebenfalls verworfen.

In einem Schritt S110 wird das Ampelbild 7 erstellt. Dazu wird von jedem der übrigen Ampelcluster t ein räumlicher Mittelwert gebildet, der dann eine Position der physikalischen Ampel t darstellt, die durch das entsprechende Ampelcluster t repräsentiert wird. Die aus den bisherigen Schritten S101 bis 108 übrig gebliebenen Ampelobjektpunkte $p'_{n_t}$ sind den physikalischen Ampeln $tp_1$-$tp_5$ zuordenbar.

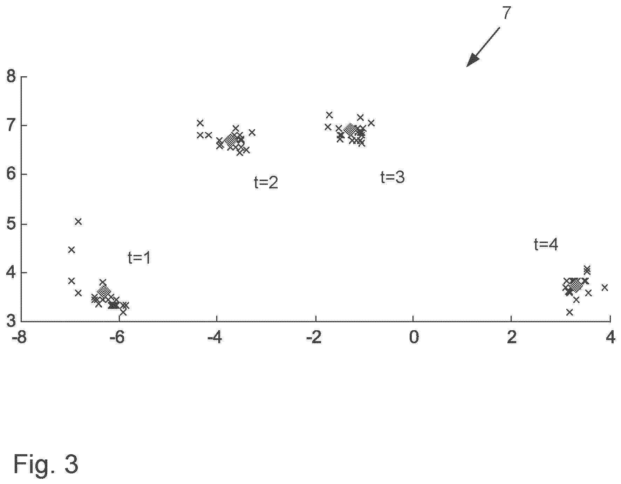

Beispielhaft ist ein Ergebnis des vorher beschriebenen Verfahrens in Figur 3 dargestellt. Hier ist das Ampelbild 7 gezeigt, dass die Ampelanlage A aus Figur 1 repräsentiert. Die Ampelobjekte $n_{c,t}$ aus allen Überfahrten c sind als (kreuzförmige) Punktwolke $\{p'_{n_t}\}$ dargestellt. Es ist zu erkennen, dass in dem Ampelbild 7 die Ampelobjekte $n_{c,t}$ in vier Cluster t=1 bis t=4 (Cluster $t_1$-$t_4$) gruppiert sind. Jedes der Cluster entspricht einer der Ampeln $tp_1$ bis $tp_4$. Die schraffierten Rauten stellen Mittelpunkte der Cluster t (räumliche Mittelwerte) dar, die jeweils eine räumliche Ampelposition der entsprechenden physikalischen Ampel repräsentieren.

Die Ampelobjekte, die für die Ampel $tp_5$ erfasst wurden, werden dem Cluster für Ampel $tp_4$ zugeordnet. Dies liegt daran, dass die Ampel $tp_5$ (als Rechtsabbiegerampel) sehr nah oder sogar angrenzend an der Ampel $tp_4$ angeordnet ist. Die in Figur 3 dargestellte horizontale Achse (x-Achse) stellt eine Richtung quer zum Fahrbahnabschnitt dar und die vertikale Achse (y-Achse) eine Richtung senkrecht zur Erdoberfläche gen Himmel dar. Figur 3 entspricht sozusagen einem Blick aus dem Fahrzeug 1 auf die Ampelanlage A. Dabei sind die Achsenwerte in Metern angeben. Beispielsweise befindet sich das Ampelcluster $t_2$ ca. 4m links und 7m über dem Fahrzeug 1.

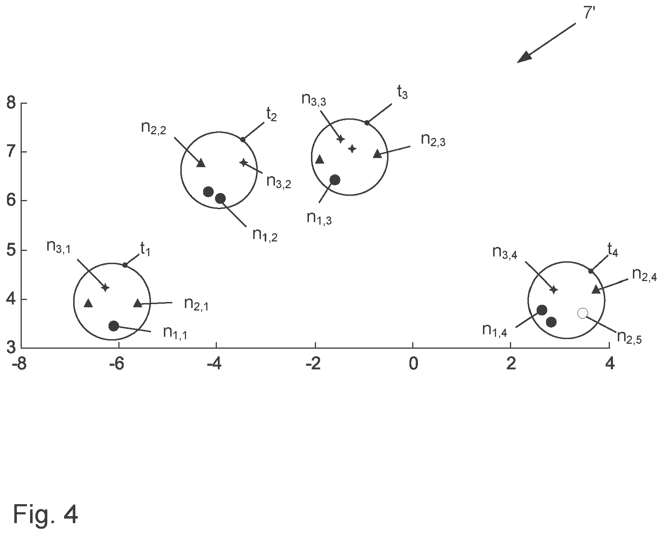

In der Figur 4 ist beispielhaft und schematisch ein weiteres Ampelbild 7' der Ampelanlage A zur weiteren Erläuterung gezeigt. In dem Ampelbild 7' ist eine Vielzahl von Ampelobjekten $n_{c,t}$ dargestellt, die repräsentativ für die Ampeln $tp_1$-$tp_5$ der Ampelanlage A sind.

Wie oben beschrieben, werden die Ampelobjekte $n_{c,t}$ überfahrspezifisch erfasst. In der Regel bedeutet "Überfahrt", dass das Fahrzeug 1 aus der Vielzahl von Fahrzeugen den Fahrbahnabschnitt Fb befährt, auf die Ampelanlage A zuführt und sie dann überquert. Während einer Überfahrt c erfasst, insbesondere kontinuierlich, das Fahrzeug 1 die Positionen und die Phasenverläufe der einzelnen Ampeln $tp_1$-$tp_5$. Mittels des in Figur 2 dargestellten Verfahrens werden aus der Gesamtheit der in Ampelbild 7' umfassten Ampelobjekte $n_{c,t}$ Ampelcluster $t_1$, $t_2$, $t_3$, $t_4$ gebildet, wobei die Ampelcluster $t_1$-$t_4$ den physikalischen Ampeln $tp_1$-$tp_5$ der Ampelanlage A entsprechen.

So lässt sich aus dem Ampelbild 7' ermitteln, dass in diesem Beispiel die Ampelobjekte $n_{c,t}$ aus vier Überfahrten c=1...4 erstellt werden. Es sei erwähnt, dass diese vier Überfahrten c=1...4 nicht nur durch dasselbe Fahrzeug 1, sondern auch durch verschiedene Fahrzeuge aus der Vielzahl von Fahrzeugen durchgeführt worden sein können. In der Figur 4 sind die Ampelobjekte $n_{c,t}$ in unterschiedlichen Formen dargestellt, wobei jede Form für eine entsprechende Überfahrt c steht. So ist zu erkennen, dass aus einer Überfahrt c=1 für die Ampel $tp_1$ und die Ampel $tp_3$ jeweils ein Ampelobjekt $n_{1,1}$ bzw. $n_{1,3}$ erfasst und den Ampelclustern $t_1$, $t_3$ zugeordnet werden. Für dieselbe Überfahrt c=1 werden für die Ampel $tp_2$ und die Ampel $tp_4$ jeweils zwei Ampelobjekte $n_{1,2}$ bzw. $n_{1,4}$ erfasst und den Ampelcluster $t_2$, $t_4$ zugeordnet.

Dass während einer Überfahrt für eine Ampel mehr als ein Ampelobjekt erzeugt wird, kann u.a. daran liegen, dass die Erfassungseinrichtung 3 des entsprechenden Fahrzeugs die entsprechende Ampel fehlerhaft erfasst und mehrere Ampelobjekte für diese Ampel erstellt und dieser zuordnet. Auch ist es möglich, dass während der Erfassung durch die Erfassungseinrichtung 3 eine Sichtlinie zwischen der Erfassungseinrichtung 3 und der entsprechenden Ampel durch ein Hindernis unterbrochen wird, sodass nach Wegfall des Hindernisses die entsprechende Ampel durch die Erfassungseinrichtung 3 wieder erfasst wird und daher ein neues Ampelobjekt dafür generiert und dieser Ampel zugeordnet wird.

Es sei angemerkt, dass die in Figur 4 gezeigten unterschiedlichen Formen der Ampelobjekte $n_{c,t}$ lediglich zur Verdeutlichung dienen und die Offenbarung nicht darauf beschränkt ist, dass die Ampelobjekte $n_{c,t}$ in einer besonderen Form in dem Ampelbild 7' dargestellt werden.

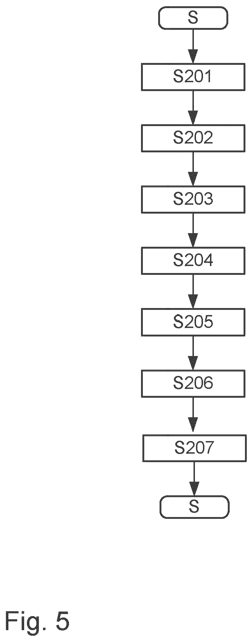

In Figur 5 ist ein Verfahren zur Gruppierung der Ampeln $tp_1$-$tp_5$ dargestellt. Dabei werden die Gruppen derart gebildet, dass jede Ampel innerhalb einer (Ampel-)Gruppe ein gleiches Phasenverhalten, oder einen ähnlichen Phasenverlauf, aufweist.

In einem Schritt S201 wird das Ampelbild 7 bzw. die Ampelobjekte $n_{c,t}$ abgerufen, das bzw. die die Ampelanlage A repräsentiert. Wie oben beschrieben, weist das Ampelbild 7 die über mehrere Überfahrten c erfassten Ampelobjekte $n_{c,t}$ für jede Ampel $tp_1$-$tp_5$ der Ampelanlage A auf. Das in der Figur 5 gezeigte Verfahren erfordert nicht spezifisch das Ampelbild 7 der Ampelanlage A (als Eingangsdatensatz). Auch andere Ampelanlagen repräsentierende Ampelbilder können verwendet werden.

In einem Schritt S202 werden inkonsistente Ampeln identifiziert. Es wird darauf hingewiesen, dass die physikalischen Ampeln $tp_1$-$tp_5$ durch entsprechende Ampelcluster $t_1$-$t_4$ in dem Ampelbild 7 repräsentiert werden.

Eine Ampel ist inkonsistent, wenn der Phasenverlauf einzelner Ampelobjekte, die derselben Ampel zugeordnet sind, zueinander inkonsistent erscheinen. Dies deutet in der Regel darauf hin, dass an der betroffenen Ampel eine (Rechts-oder Links-)Abbiegerampel steht, die nur gelegentlich leuchtet. Diese Abbiegerampeln hängen in der Regel so nah an der betroffenen Ampel, dass das in Figur 2 gezeigte Verfahren fälschlicherweise die Abbiegerampel darstellende Ampelobjekt der betroffenen Ampel zuordnet. Diese Situation liegt bspw. bei der in der Figur 1 gezeigten Ampelanlage A vor. Hier ist die Ampel $tp_5$ nah an der Ampel $tp_4$ angeordnet, so dass das in Figur 2 gezeigte Verfahren keine zwei Ampelcluster für die Ampeln $tp_4$ und $tp_5$ erkennt, sondern nur das Ampelcluster $t_4$. Mit anderen Worten, die zwei Ampeln $tp_4$ und $tp_5$ werden durch das in Figur 2 gezeigte Verfahren nicht auseinandergehalten.

In dem beispielhaften Ampelbild 7' liegen das Ampelobjekt $n_{2,4}$ und Ampelobjekt $n_{2,5}$ der Ampeln $tp_4$ bzw. $tp_5$ derart nah beieinander, dass sie demselben Ampelcluster $t_4$ zugeordnet werden. Daher befindet sich das in Figur 4 dargestellte Ampelobjekt $n_{2,5}$ (das für eine Überfahrt c=2 erstellte Ampelobjekt für die Ampel $t_5$) in dem Ampelcluster $t_4$.

Um diesem Umstand der inkonsistenten Ampeln bzw. Ampelcluster entgegenzuwirken, werden für jedes Ampelcluster $t_1$ bis $t_4$ für jede Überfahrt c alle möglichen Ampelobjektpaarkombination ermittelt und für jede der ermittelten Ampelobjektpaarkombinationen ein Korrelationsfaktor $\rho_{n_{c,t},n'_{c,t}}$ bestimmt. Die Korrelationsfaktoren $\rho_{n_{c,t},n'_{c,t}}$ ($\rho_{obj}$) werden wie folgt gebildet:

$$\rho_{n_{c,t},n'_{c,t}} = \frac{Tm_{n_{c,t},n'_{c,t}}}{Tt_{n_{c,t},n'_{c,t}}}$$

Hierbei ist $n_{c,t}$ ein erstes Ampelobjekt des Ampelobjektpaars und $n'_{c,t}$ ein zweites Ampelobjekt des Ampelobjektpaars. $Tm_{n_{c,t},n'_{c,t}}$ und $Tt_{n_{c,t},n'_{c,t}}$ stehen für die Überlappungsdauer bzw. Übereinstimmungsdauer zwischen dem ersten Ampelobjekt $n_{c,t}$ und dem zweiten Ampelobjekt $n'_{c,t}$ des Ampelobjektpaars.

Alle einer Überfahrt c zugeordneten Ampelobjekte werden unter Berücksichtigung der entsprechenden Korrelationsfaktoren $\rho_{n_{c,t},n'_{c,t}}$ geclustert. Vorliegend erfolgt das in der Regel mittels eines hierarchischen Clusteralgorithmus. Die resultierenden Cluster werden gezählt. Anschließend wird für jedes Ampelcluster $t_1$ bis $t_4$ der Mittelwert der Anzahl der resultierenden Cluster über alle Überfahrten c ermittelt. Wenn dieser ermittelte Mittelwert einen vorbestimmten Grenzwert überschreitet, wird das Ampelcluster als inkonsistent bewertet. Der vorbestimmte Grenzwert kann bspw. 1,2 sein.

Im vorliegenden Beispiel des Ampelbilds 7 stellt das Ampelcluster $t_4$ ein inkonsistentes Ampelcluster dar.

In einem Schritt S203 werden die Phasenverläufe aller Ampelobjekte $n_c$, insbesondere die der als konsistent bewerteten Ampelcluster, auf Plausibilität überprüft. Hierbei werden diejenigen Ampelobjekte $n_c$ für die folgenden Schritte des Verfahrens verworfen, deren Phasenverläufe folgende Reihenfolgen von Ampelphasen innerhalb ihres Phasenverlaufs aufweisen: Gelb-Phase auf Rot- Phase, Rot-Gelb-Phase auf Grün-Phase, Grün-Phase oder Rot-Gelb-Phase auf eine Gelb-Phase, Rot-Phase oder eine Gelb-Phase auf eine Rot-Gelb-Phase. Nicht-plausible Ampelobjekte $n_c$ werden verworfen

In einem Schritt S204 werden aus den konsistenten Ampelclustern $t_1$, $t_2$, $t_3$ alle Ampelpaarkombinationen gebildet. Es werden vorliegend also die Ampelpaarkombinationen $t_1/t_2$, $t_1/t_3$, $t_2/t_3$ gebildet.

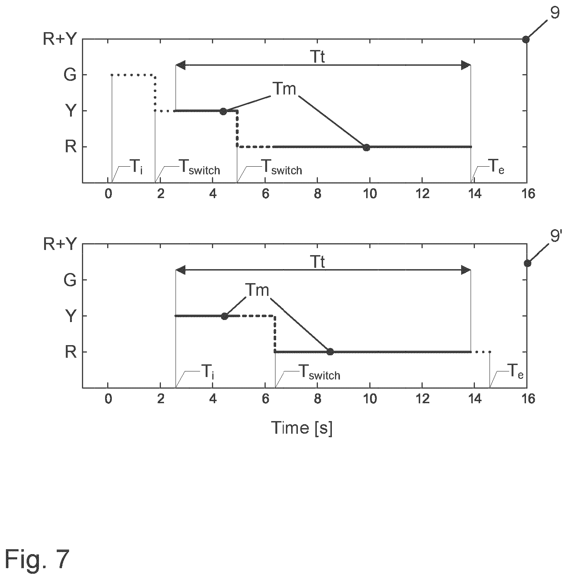

Anschließend werden im Schritt S205 überfahrtsübergreifend eine Überlappungsdauer Tt und eine Übereinstimmungsdauer Tm zwischen allen Ampelobjekten $n_{c,t}$, die dem ersten Ampelcluster des Ampelpaars zuordnet sind, und allen Ampelobjekten $n_{c,t}$, die dem zweiten Ampelcluster des Ampelpaars zugeordnet sind, aufsummiert und daraus ein Korrelationsfaktor $\rho_{AP}$ zwischen der ersten und der zweiten Ampel des Ampelpaars ermitteln. Mit Bezug zu Figur 7 werden die Begriffe "Überlappungsdauer" und "Übereinstimmungsdauer" später genauer beschrieben.

Der Schritt S205 wird beispielhaft für das Ampelpaar $t_1/t_2$ beschrieben. Für die Berechnung der überfahrtsübergreifenden Überlappungsdauer $Tt_{t_1,t_2}$ ($Tt_{AP}$) für das Ampelpaar aus Ampelcluster $t_1$ und Ampelcluster $t_2$ gilt folgende Formel:

$$Tt_{t_1,t_2} = \sum_{c=1}^{C} \sum_{n_{c,t_1}=1}^{N_{c,t_1}} \sum_{n_{c,t_2}=1}^{N_{c,t_2}} Tt_{n_{c,t_1},n_{c,t_2}}$$

Hierbei steht c für die jeweilige Überfahrt aus c=1...C und $n_{c,t_1}$ und $n_{c,t_2}$ für das jeweilige Ampelobjekt des Ampelclusters $t_1$ bzw. Ampelclusters $t_2$, wobei $N_{c,t_1}$ und $N_{c,t_2}$ die Anzahl an Ampelobjekten $n_{c,t}$ darstellt, die aus einer Überfahrt c für die entsprechende Ampel $tp_1$ oder Ampel $tp_2$ erstellt/erfasst wurden. $Tt_{n_{c,t_1},n_{c,t_2}}$ $(Tt_n)$ steht für die überfahrtspezifische Überlappungsdauer zwischen einem dem Ampelcluster $t_1$ zugehörigen Ampelobjekt $n_{c,t_1}$ und einem dem Ampelcluster $t_2$ zugehörigen Ampelobjekt $n_{c,t_2}$.

Zum Beispiel ist aus dem beispielhaften Ampelbild 7' aus Figur 4 ermittelbar, dass für die Überfahrt c=1 für die erste Ampel $tp_1$ nur ein (kreisförmiges) Ampelobjekt $n_{1,1}$ vorliegt und für die zweite Ampel $tp_2$ zwei (kreisförmige) Ampelobjekte $n_{1,2}$. Für die zweite Überfahrt c=2 liegen für die erste Ampel $tp_1$ zwei (dreieckige) Ampelobjekte $n_{2,1}$ vor, während für die zweite Ampel $tp_2$ nur ein (dreieckiges) Ampelobjekt $n_{2,2}$ vorliegt. Für die Überfahrt c=3 liegt für beide Ampeln $t_1,t_2$ jeweils ein (sternförmiges) Ampelobjekt $n_{3,1}$, $n_{3,2}$ vor.

Für die Berechnung der Übereinstimmungsdauer $Tm_{t_1,t_2}$ ($Tm_{AP}$) für das Ampelpaar aus Ampelcluster $t_1$ und Ampelcluster $t_2$ gilt folgende Formel:

$$Tm_{t_1,t_2} = \sum_{c=1}^{C} \sum_{n_{c,t_1}=1}^{N_{c,t_1}} \sum_{n_{c,t_2}=1}^{N_{c,t_2}} Tm_{n_{c,t_1},n_{c,t_2}}$$

$Tm_{n_{c,t_1},n_{c,t_2}}$ $(Tm_n)$ steht für die überfahrtspezifische Übereinstimmungsdauer zwischen einem dem Ampelcluster $t_1$ zugehörigen Ampelobjekt $n_{c,t_1}$ und einem dem Ampelcluster $t_2$ zugehörigen Ampelobjekt $n_{c,t_2}$.

Anschließend kann dann ein Korrelationsfaktor $\rho_{t_1,t_2}$ (allgemein $\rho_{AP}$) für das Ampelpaar $t_1/t_2$ gemäß folgender ermittelt werden:

$$\rho_{t_1,t_2} = \frac{Tm_{t_1,t_2}}{Tt_{t_1,t_2}}$$

Im Schritt S206 werden basierend auf den Korrelationsfaktoren aller Ampelpaarkombinationen alle konsistenten Ampelcluster gruppiert. Dabei werden die Ampeln derart gruppiert, dass alle innerhalb einer Gruppe befindlichen Ampeln einen gleichen Phasenverlauf aufweisen. Das Gruppieren erfolgt über entsprechende Clusteringverfahren, wie beispielsweise den hierarchischen Clusteralgorithmus. Die resultierenden Gruppen, sog. Ampelgruppen, werden mit einem Index g=1...G referenziert. Jedes konsistente Ampelcluster ist einer dieser Ampelgruppen zugeordnet.

Im Schritt S207 werden die als inkonsistent erkannten Ampelcluster t* einer Ampelgruppe g zugeordnet. Dabei wird für jede Überfahrt c eine Überlappungsdauer $Tt_{n_{c,t^*},g}$ und eine Übereinstimmungsdauer $Tm_{n_{c,t^*},g}$ für ein Ampelobjekt $n_{c,t^*}$ in einem inkonsistenten Ampelcluster t* hinsichtlich aller Ampelobjekte $n_{c,tg}$ in einer Ampelgruppe g ermittelt.

Dabei wird die überfahrtspezifische Überlappungsdauer $Tt_{n_{c,t^*},g}$ zwischen dem Ampelobjekt $n_{c,t^*}$ und allen Ampelobjekten $n_{c,tg}$ aus der Ampelgruppe g wie folgt ermittelt:

$$Tt_{n_{c,t^*},g} = \sum_{t_g=1}^{T_g} \sum_{n_{c,t_g}=1}^{N_{c,t_g}} Tt_{n_{c,t^*},n_{c,t_g}}$$

Hierbei steht $T_g$ für die Anzahl der Ampelcluster in der jeweiligen Ampelgruppe g. Ferner steht $n_{c,tg}$ für das jeweilige dem Ampelcluster $t_g$ zugeordnete Ampelobjekt, wobei $N_{c,tg}$ die Anzahl an Ampelobjekten innerhalb einer Überfahrt c für das entsprechende Ampelcluster $t_g$ darstellt. $Tt_{n_{c,t^*},n_{c,t_g}}$ steht für die überfahrtspezifische Überlappungsdauer zwischen einem der inkonsistenten Ampel t* zugehörigen Ampelobjekt $n_{c,t^*}$ und einem dem Ampelcluster $t_g$ zugehörigen Ampelobjekt $n_{c,tg}$.

Die überfahrtspezifische Überlappungsdauer $Tm_{nc,t^*,g}$ pro Überfahrt c wird wie folgt ermittelt:

$$Tm_{n_{c,t^*},g} = \sum_{t_g=1}^{T_g} \sum_{n_{c,t_g}=1}^{N_{c,t_g}} Tm_{n_{c,t^*},n_{c,t_g}}$$

$Tm_{n_{c,t^*},n_{c,t_g}}$ steht für die überfahrtspezifische Übereinstimmungsdauer zwischen einem dem inkonsistenten Ampelcluster t* zugehörigen Ampelobjekt $n_{c,t^*}$ und allen der Ampelgruppe g zugehörigen Ampelobjekten $n_{c,tg}$.

Anschließend wird für jede inkonsistente Ampel t* und für jede gebildete Ampelgruppe g ein überfahrtsübergreifender Satz $\Gamma_{g,t^*}$ mit allen Ampelobjekten $n_{c,t^*}$ der inkonsistenten Ampel t* gemäß der folgenden Formel gebildet:

$$\Gamma_{g,t^*} = \bigcup_{c=1}^{C} \left\{ n_{c,t^*} | Tt_{n_{c,t^*},g} > 0 \wedge \frac{Tm_{n_{c,t^*},g}}{Tt_{n_{c,t^*},g}} > 0.99 \right\}$$

Man erkennt also, dass die dem Satz $\Gamma_{g,t^*}$ zugehörigen Ampelobjekte der inkonsistenten Ampel t* zu den Ampelobjekten $n_{c,g}$ der Ampelgruppe g einen Mindestkorrelationsfaktor $\frac{Tm_{n_{c,t^*},g}}{Tt_{n_{c,t^*},g}}$ von 0.99 aufweisen. Der Wert des Mindestkorrelationsfaktors ist hier beispielhaft und kann angepasst werden.

Für die Ampelobjekte aus dem Satz $\Gamma_{g,t^*}$ werden jeweils überfahrts- und ampelobjektübergreifend eine Überlappungsdauer $Tt_{t^*,g}$ und eine Übereinstimmungsdauer $Tm_{t^*,g}$ gemäß folgender Formeln ermittelt.

$$Tt_{t^*,g} = \sum_{c=1}^{C} \sum_{n_{c,t^*}=1}^{N_{c,t^*}} Tt_{n_{c,t^*},g}$$

$$Tm_{t^*,g} = \sum_{c=1}^{C} \sum_{n_{c,t^*}=1}^{N_{c,t^*}} Tm_{n_{c,t^*},g}$$

$$\text{mit } n_{c,t^*} \in \Gamma_{g,t^*}$$

Bei den obigen zwei Formeln gilt zusätzlich $n_{c,t^*} \in \Gamma_{g,t^*}$. So werden also nur Ampelobjekte $n_{c,t^*}$ der inkonsistenten Ampel t* aufsummiert, die den oben erwähnten Mindestkorrelationsfaktor zur Ampelgruppe g aufweisen bzw. überschreiten.

Für jede inkonsistente Ampel t* wird eine entsprechende Ampelgruppe $g_{t^*}^*$ ermittelt, so dass die Anzahl der Ampelobjekte $\Gamma_{g,t^*}$ der inkonsistenten Ampel t* am höchsten ist, wobei die Ampelobjekte $n_{c,t^*} \in \Gamma_{g,t^*}$ mit der Phase der entsprechenden Gruppe $g_{t^*}^*$ einen hohen Korrelationsfaktor ($\frac{Tm_{n_{c,t^*},g}}{Tt_{n_{c,t^*},g}} > 0,99$) aufweisen.

Dazu wird folgende Formel verwendet:

$$g_{t^*}^* = \underset{g}{\operatorname{argmax}} \left\{ |\Gamma_{g,t^*}| \right\}$$

Die inkonsistente Ampel t* wird dieser Ampelgruppe $g_{t^*}^*$ zugeordnet, wenn die Anzahl der korrelierten Ampelobjekte $|\Gamma_{g_{t^*}^*,t^*}|$ aus den Ampelobjekten $n_{c,t^*}$ der inkonsistenten Ampel t* und Ampelobjekten $n_{c,g_{t^*}^*}$ der entsprechenden Ampelgruppe $g_{t^*}^*$ gleich der oder größer als ein vorbestimmter Bruchteil aller (korrelierten und nicht-korrelierten) Ampelobjekte $n_{c,t^*}$ der inkonsistenten Ampel t* ist. Dabei kann der vorbestimmte Bruchteil bspw. ein Drittel sein.

Dabei werden nur die korrelierten Ampelobjekte $n_{c,t^*} \in \Gamma_{g,t^*}$ der inkonsistenten Ampel t* der Ampelgruppe $g_{t^*}^*$ zugeordnet. Die übrigen (nicht-korrelierten) Ampelobjekte $n_{c,t^*} \notin \Gamma_{g,t^*}$ entsprechen mit hoher Wahrscheinlichkeit (Phasen-)Sichtungen der Abbiegerampel $t_5$, die nicht weiter interpretierbar sind.

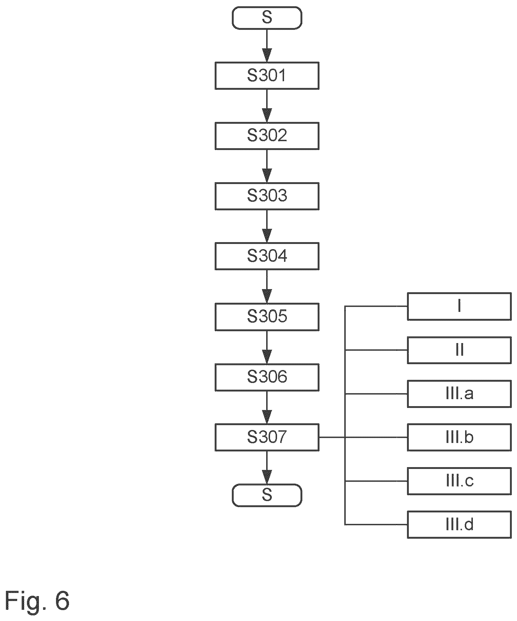

In Figur 6 ist ein Verfahren zum Bestimmen einer Ampelphase einer Ampel bzw. einer Ampelgruppe einer Ampelanlage. Nachfolgend wird das Verfahren für eine Ampel aus den Ampeln $tp_1$-$tp_5$ oder eine Ampelgruppe aus den Ampelgruppen g durchgeführt.

Für das Verfahren können bspw. die durch die Ampelobjekte repräsentierten Informationen verwendet werden. In Alternativen können die für das Verfahren erforderlichen Informationen auch in anderer Form als Ampelobjekte bereitgestellt/repräsentiert werden.

Insbesondere wird das Verfahren durchgeführt, wenn das Fahrzeug 1 sich kurz vor oder an der Haltelinie der Ampelanlage A (entspricht Haltelinie an einer Kreuzung) befindet. Die Haltelinie kann bekannt sein, beispielsweise aus Karteninformation. Alternativ kann die Haltelinie als Medianwert über alle Positionen entlang des Verlaufs des Fahrbahnabschnitts (bzw. entlang der Trajektorie des Fahrzeugs 1) ermittelt werden, an denen das Fahrzeug 1 an den Ampelobjekten vorbeifährt.

In jedem Fall befindet sich das Fahrzeug 1 also in einer Position, in der die fahrzeugseitige Erfassungseinrichtung 3 die Ampelanlage A und die Ampeln nicht mehr erfassen kann. Dies liegt vor allem an einem begrenzten Öffnungswinkel einer Kameraeinrichtung der Erfassungseinrichtung 3. Jedoch ist gerade der Zeitpunkt beim Überfahren bzw. Halten an der Haltelinie relevant für eine Ampelspurzuordnung.

In einem Schritt S301 wird ein Zeitpunkt $T_{event}$ abgerufen, zu dem das Fahrzeug 1 entweder die Haltelinie überfährt oder an dieser steht. Dies lässt sich aus dem fahrzeugseitigen Erfassungssystem 3 ableiten und insbesondere in Kombination mit Informationen aus den Ampelobjekten $n_{c,t}$.

Wenn das Fahrzeug 1 diese Haltelinie mit einer Geschwindigkeit größer als einer vorbestimmten Geschwindigkeit, bspw. 3km/h passiert, wird das als das Überfahren der Haltelinie interpretiert. Wenn das Fahrzeug 1 an der Haltelinie eine Geschwindigkeit von 1 km/h erstmalig unterschreitet, wird das als ein Halten an der Haltelinie interpretiert. Dabei umfasst "an der Haltelinie" einen vorbestimmten Abstand des Fahrzeugs 1 (in Fahrtrichtung) zur Haltelinie von bis zu mindestens 25m, vorzugsweise 15m. Hierbei kann der Abstand von einem Vorderende des Fahrzeugs 1 bis zur Haltelinie gemeint sein. Auch andere vorbestimmte Abstände sind denkbar, sofern sie geeignet sind, ein Halten des Fahrzeugs an der Haltelinie zu indizieren.

In einem Schritt S302 wird ein erster Erfassungszeitpunkt $T_i$ abgerufen, zu dem das Fahrzeug 1 eine Ampel erstmalig erfasst.

Ein Zeitintervall $\Delta T_i$ zwischen dem Zeitpunkt $T_i$ der ersten Sichtung der Ampel und dem Event-Zeitpunkt $T_{event}$ kann ermittelt werden.

In einem Schritt S303 wird ein letzter Erfassungszeitpunkt $T_e$ abgerufen, zu dem das Fahrzeug die Ampel letztmalig erfasst.

Ein Zeitintervall $\Delta T_e$ zwischen dem Zeitpunkt $T_e$ der letzten Sichtung der Ampel und dem Event-Zeitpunkt $T_{event}$ kann ermittelt werden. Das Zeitintervall $\Delta T_e$ wird auf 0 gesetzt, wenn zum Event-Zeitpunkt $T_{event}$ die Ampel noch sichtbar ist.

In einem Schritt S304 ein Phasenverlauf der Ampel abgerufen, der sich von dem ersten Erfassungszeitpunkt $T_i$ bis zum letzten Erfassungszeitpunkt $T_e$ erstreckt. Aus dem abgerufenen Phasenverlauf lässt sich eine Ampelphase $C_g$ der Ampel ermitteln, die zum Zeitpunkt $T_i$ vorliegt. In der Regel kann die Ampelphase $C_g$ zumindest folgende Werte aufweisen: grün, gelb, rot sowie rot und gelb. Es können also folgende Ampelphasen $C_g$ auftreten: Rotphase, Gelbphase, Rotphase, Grünphase sowie Rot-Gelb-Phase

Für den Fall, dass eine Ampelphase $C_g$ einer Ampelgruppe abgerufen wird, kann es vorkommen, dass Ampeln dieser Ampelgruppe widersprüchliche Ampelphasen anstatt einer gemeinsamen Ampelphase annehmen/wiedergeben. Dann wird die Ampelphase $C_g$ für diese Ampelgruppe auf "ungültig" gesetzt.

In einem Schritt S305 wird ein Phasenwechsel-Zeitpunkt $T_{switch}$ ermittelt oder abgerufen, zu dem ein Phasenwechsel der Ampel erfolgt bzw. erfasst wurde. Mit anderen Worten, zum Zeitpunkt $T_{switch}$ verändert sich die Ampelphase $C_g$ der Ampel. Der Phasenwechsel-Zeitpunkt $T_{switch}$ liegt vor dem letzten Erfassungszeitpunkt $T_e$.

Ein Zeitintervall $\Delta T_{switch}$ zwischen dem Zeitpunkt $T_{switch}$ des Phasenwechsels der Ampel und dem Event-Zeitpunkt $T_{event}$ kann ermittelt werden.

Falls es keinen Phasenwechsel gibt oder falls es Widersprüche zwischen zwei oder mehr Ampeln einer Ampelgruppe vorliegen, wird der Zeitpunkt $T_{switch}$ und somit auch das Zeitintervall $\Delta t_{switch}$ auf "ungültig" gesetzt. Wenn kein Phasenwechsel in dem abgerufenen Phasenverlauf vorliegt, kann der Phasenwechsel-Zeitpunkt (wie später beschrieben) ermittelt werden.

In einem Schritt S306 wird eine Ampelphase $C^{\Delta-}$ vor dem Phasenwechsel-Zeitpunkt $T_{switch}$ der Ampel und eine Ampelphase $C^{\Delta+}$ nach dem Zeitpunkt $T_{switch}$ des Phasenwechsels der Ampel ermittelt. Die Ampelphasen $C^{\Delta-}$ und $C^{\Delta+}$ geben also diejenigen Ampelphasen an, die vor bzw. nach dem Zeitpunkt $T_{switch}$ vorliegen. Die Ampelphasen $C^{\Delta-}$ und $C^{\Delta+}$

können die in Schritt S304 beschriebenen Ampelphasen annehmen.

In einem Schritt S307 wird bestimmt, welche Ampelphase $C_g$ zum Event-Zeitpunkt $T_{event}$ vorliegt. Im Speziellen wird eine Wahrscheinlichkeit P($C_g$=rot) ermittelt, dass die Ampel zum Zeitpunkt $T_{event}$ eine Ampelphase von "rot" aufweist. Mit anderen Worten, es wird ermittelt, mit welcher Wahrscheinlichkeit die Ampel rot ist (bzw. eine rote Ampelphase anzeigt), wenn das Fahrzeug 1 an der Ampel hält oder an dieser vorbeifährt. Für die Wahrscheinlichkeit P($C_g$=rot) gilt:

$$P(C_g = rot) = P\left(C_g = rot \,\middle|\, \Delta T_e = \Delta t_e, \Delta T_i = \Delta t_i, C_g = c, \Delta T_{switch} = \Delta t_{switch}, C^{\Delta+} = c^{\Delta+}, C^{\Delta-} = c^{\Delta-}\right)$$

Die Wahrscheinlichkeit P($C_g$=rot) ist also eine bedingte Wahrscheinlichkeit, die die Größen $\Delta T_e$, $\Delta T_i$, $C_g$, $\Delta T_{switch}$, $C^{\Delta-}$ und $C^{\Delta+}$ berücksichtigt.

Für die Wahrscheinlichkeit P($C_g$=grün), dass die Ampel zum Zeitpunkt $T_{event}$ eine Ampelphase $C_g$ von "grün" aufweist, gilt:

$$P\left(C_g = gr\ddot{u}n\right) =$$
$$= P\left(C_g = gr\ddot{u}n \,\middle|\, \Delta T_e = \Delta t_e, \Delta T_i = \Delta t_i, C_g = c, \Delta T_{switch} = \Delta t_{switch}, C^{\Delta+} = c^{\Delta+}, C^{\Delta-} = c^{\Delta-}\right) =$$
$$= 1 - P\left(C_g = rot\right)$$

Die Wahrscheinlichkeit P($C_g$=grün) ist ebenfalls eine bedingte Wahrscheinlichkeit, die die Größen $\Delta T_i$, $\Delta T_e$, $C_g$, $\Delta T_{switch}$, $C^{\Delta-}$ und $C^{\Delta+}$ berücksichtigt.

Zur Berechnung der Wahrscheinlichkeiten P($C_g$=rot) bzw. P($C_g$=grün) kann es zu drei Fällen I, II, III kommen. Diese Fälle hängen von den Zeitintervallen $\Delta T_e$ und/oder $\Delta T_{switch}$ ab.

Im Fall I ist $\Delta T_e$=0s. Die Erfassungseinrichtung 3 hat die Ampel zum Zeitpunkt $T_{event}$ noch gesehen. Entsprechend ist die Ampelphase $C_g$ der Ampel bekannt, so dass für die Wahrscheinlichkeit P($C_g$=rot) gilt:

$$P\left(C_g = rot \,\middle|\, \Delta T_e = 0, C_g = c\right) = \begin{cases} 1, & c = rot \\ 0, & c = gr\ddot{u}n \\ 0{,}8, & c = gelb \\ 0{,}7, & c = gelb + rot \end{cases}$$

Die Wahrscheinlichkeit P($C_g$=rot) von 0,8 für die Ampelphase c=gelb erlaubt, dass eine gelbe Ampel als grün oder rot interpretierbar ist, wobei dieser Wert von 0,8 fahrerabhängig ist. Entsprechendes gilt für die Wahrscheinlichkeit P($C_g$=rot) von 0,7 für c=gelb+rot. Die Wahrscheinlichkeiten für c=gelb und c=gelb+rot sind hier beispielhaft. In Alternativen können diese Werte fahrerspezifisch ermittelt werden. Mit anderen Worten, die Wahrscheinlichkeiten für c=gelb und c=gelb+rot können in Abhängigkeit eines Fahrverhaltens eines Fahrers bestimmt/ermittelt werden.

Im Fall II ist das Zeitintervall $\Delta T_e$ größer als 0s und das Zeitintervall $\Delta T_{switch}$ weist einen gültigen Wert (und somit einen Wert größer als 0s) auf. Somit kann die Ampelphase $C_g$ zum Zeitpunkt $T_{event}$ aus dem zuletzt erfassten Phasenwechsel zum Zeitpunkt $T_{switch}$ abgeleitet werden.

Dazu werden Phasendauern der Ampelphasen, die in der Regel unbekannt sind, berücksichtigt, indem die Phasendauern als Zufallsvariablen modelliert werden. Es wird also ein Referenzampelzyklus modelliert. In dem Modell steht $T_{cycle}$ für eine Umlaufzeit des Referenzampelzyklus. Eine Umlaufzeit entspricht der Dauer, die eine Ampel benötigt, um einen kompletten Schaltvorgang zu durchlaufen. Bspw. kann ein kompletter Schaltvorgang ein Ampelphasenverlauf mit den Ampelphasen in der Reihenfolge "grün", "gelb", "rot" und "gelb und rot" sein.

Für die Umlaufzeit $T_{cycle}$ gilt:

$$T_{cycle} \sim U(t_{cycle\_min}, t_{cycle\_max})$$

Hierbei ist $t_{cycle\_min}$ eine minimale Umlaufzeit und $t_{cycle\_max}$ die maximale Umlaufzeit.

Für den Referenzampelzyklus wird also angenommen, dass eine Gleichverteilung der Umlaufzeit in dem obigen Wertebereich [$t_{cycle\_min}$; $t_{cycle\_max}$] vorliegt.

Beispielhaft kann $t_{cycle\_min}$ 30s betragen und $t_{cycle\_max}$ 120s. Diese Werte stammen aus der Richtlinie für Lichtsignalanlagen, die ein für Deutschland gültiges Regelwerk ist. Für andere Länder können entsprechend andere Werte vorgegeben sein.

Für eine Phasendauer $X_{rot}$, in der der Referenzampelzyklus rot anzeigt, gilt folgendes:

$$X_{rot} \sim U(rot_{min}, rot_{max})$$

Auch hier wird für den Referenzampelzyklus angenommen, dass die Phasendauer $X_{rot}$ in dem Wertebereich [$rot_{min}$; $rot_{max}$] gleichverteilt ist. In der Regel geben $rot_{min}$ und $rot_{max}$ den minimalen bzw. maximalen Bruchteil von der Umlaufzeit $T_{cycle}$ an, zu der der Referenzampelzyklus "rot" anzeigt. Beispielsweise kann $rot_{min}=0,3$ und $rot_{max}=0,7$ sein. Alternativ kann der Wertebereich für die Phasendauer $X_{rot}$ auch durch absolute Mindest- und Maximalzeiten in Sekunden angeben sein.

Für den Fall II gilt für die Wahrscheinlichkeit $P(C_g=rot)$:

$$P\big(C_g = rot \big| \Delta T_{switch} = \Delta t_{switch}, C^{\Delta+} = c^{\Delta+}, T_{cycle} = t_{cycle}, X_{rot} = x_{rot} \big) =$$

$$= \begin{cases} min\left\{\dfrac{\Delta t'_{switch}}{t_{trans}}, 1\right\}, & c^{\Delta+} = rot \vee gelb, \Delta t'_{switch} < x_{rot} * t_{cycle} \\[2mm] 0, & c^{\Delta+} = rot \vee gelb, \Delta t'_{switch} \geq x_{rot} * t_{cycle} \\[2mm] 0, & c^{\Delta+} = grün \vee (rot + gelb), \Delta t'_{switch} < (1 - x_{rot}) * t_{cycle} \\[2mm] min\left\{\dfrac{\Delta t'_{switch} - (1 - x_{rot}) * t_{cycle}}{t_{trans}}, 1\right\}, & c^{\Delta+} = grün \vee (rot + gelb), \Delta t'_{switch} \geq (1 - x_{rot}) * t_{cycle} \end{cases}$$

Hierbei ist $\Delta t'_{switch}$ das zykluskorrigierte Zeitintervall, das seit dem letzten Phasenwechsel verlaufen ist. Für $\Delta t'_{switch}$ gilt:

$$\Delta t'_{switch} = \Delta t_{switch} \; mod \; t_{cycle}$$

Insbesondere wird das zykluskorrigierte Zeitintervall $\Delta t'_{switch}$ verwendet, um den Fall abzufangen, dass mehr als eine komplette Umlaufzeit der Ampel nach dem Zeitpunkt $T_e$ verstrichen ist. Es ist auch möglich, lediglich das (nicht korrigierte) Zeitintervall $\Delta t_{switch}$ in für den Fall II zu verwenden.

Ferner ist hierbei $t_{trans}$ ein vorbestimmter, insbesondere fester, Paramater, der einer Übergangszeit nach dem Wechsel der Ampel auf "rot" entspricht. In dieser Übergangszeit $t_{trans}$ verhält sich ein Fahrer des Fahrzeugs 1 so, als wäre die Ampel noch "grün". Während dieser Übergangszeit $t_{trans}$ gibt es eine Wahrscheinlichkeit ungleich 0, dass die aktuelle Phase der Ampel als grün "interpretiert" wird. Die Übergangszeit $t_{trans}$ weist in der Regel einen Wert von wenigen Sekunden auf. So kann die Übergangszeit $t_{trans}$ beispielsweise einen Wert zwischen 0s und 5s annehmen und insbesondere 3s. Ferner kann eine weitere Übergangszeit nach einem Phasenwechsel auf "gelb" berücksichtigt werden. Die weitere Übergangszeit ist in der Regel länger als die Übergangszeit $t_{trans}$ und die Wahrscheinlichkeit, dass ein Fahrer in der weiteren Übergangszeit die Ampel überquert, ist höher.

Im Folgenden wird die Fallunterscheidungen aus dem Fall II erklärt.

Wenn die nach dem Phasenwechsel vorliegende Ampelphase $C^{\Delta+}$ eine rote oder gelbe Ampelphase ist, wird das Zeitintervall $\Delta T_{switch}$ (bzw. das zykluskorrigierte Zeitintervall $\Delta t'_{switch}$) mit der roten Phasendauer $X_{rot}$ des Referenzampelzyklus verglichen. Hier wird die rote Phasendauer $X_{rot}$ des Referenzampelzyklus als Bruchteil $X_{rot}$ von der Umlaufzeit $t_{cycle}$ angegeben.

Ist das Zeitintervall $\Delta T_{switch}$ kleiner (kürzer) als die rote Phasendauer $X_{rot}$ des Referenzampelzyklus, so wird angenommen, dass die rote Ampelphase mit einer Wahrscheinlichkeit $P(C_g=rot)$ vorliegt, wobei die Wahrscheinlichkeit $P(C_g=rot)$ den kleineren Wert von $\left\{\dfrac{\Delta t'_{switch}}{t_{trans}}, 1\right\}$ annimmt. Es wird also angenommen, dass die Ampel nach dem letzten Erfassungszeitpunkt $T_e$ nicht auf die nächste Ampelphase weitergeschalten hat, so dass eine rote Ampelphase zum Event-Zeitpunkt $T_{event}$ vorliegt.

Ist jedoch das Zeitintervall $\Delta T_{switch}$ größer (länger) oder gleich der roten Ampelphase $X_{rot}$ des Referenzampelzyklus, so wird angenommen, dass die Ampel zwischen dem letzten Erfassungszeitpunkt $T_e$ und dem Event-Zeitpunkt $T_{event}$ auf die nächste (also grüne) Ampelphase geschalten hat, so dass eine grüne Ampelphase zum Event-Zeitpunkt $T_{event}$ vorliegt. Die Wahrscheinlichkeit $P(C_g=rot)$ liegt entsprechend dann bei 0.

Für die weiteren Fallunterscheidungen des Falls II gilt entsprechendes.

Es ist angemerkt, dass der Referenzampelzyklus die Übergangszeit $t_{trans}$ nicht berücksichtigen muss. So kann die Übergangszeit $t_{trans}$ ignoriert werden, so dass sich für die erste und vierte Fallunterscheidung aus Fall II immer eine Wahrscheinlichkeit von 1 ergibt. Es gilt dann Folgendes:

$$P\left(C_g = rot \mid \Delta T_{switch} = \Delta t_{switch}, C^{\Delta+} = c^{\Delta+}, T_{cycle} = t_{cycle}, X_{rot} = x_{rot}\right) =$$

$$= \begin{cases} 1, & c^{\Delta+} = rot \lor gelb, \Delta t'_{switch} < x_{rot} * t_{cycle} \\ 0, & c^{\Delta+} = rot \lor gelb, \Delta t'_{switch} \geq x_{rot} * t_{cycle} \\ 0, & c^{\Delta+} = gr\ddot{u}n \lor (rot + gelb), \Delta t'_{switch} < (1 - x_{rot}) * t_{cycle} \\ 1, & c^{\Delta+} = gr\ddot{u}n \lor (rot + gelb), \Delta t'_{switch} \geq (1 - x_{rot}) * t_{cycle} \end{cases}$$

Die für den Fall II angegebene Wahrscheinlichkeit für $P(C_g=rot)$ kann für alle möglichen Umlaufzeiten $T_{cycle}$ und alle möglichen Phasendauern $X_{rot}$ berechnet werden. Somit lässt sich dann eine Gesamtwahrscheinlichkeit $P(C_g=rot)$ über alle Umlaufzeiten $T_{cycle}$ und Phasendauern $X_{rot}$ wie folgt ermitteln:

$$P\left(C_g = rot \mid \Delta T_e = \Delta t_e, \Delta T_{switch} = \Delta t_{switch}, C^{\Delta+} = c^{\Delta+}\right) =$$

$$= \int_{t_{cycle\_min}}^{t_{cycle\_max}} \int_{\max\{rot_{min}; \frac{\Delta t'_{switch} - \Delta t_e}{t_{cycle}}\}}^{rot_{max}} P\left(C_g = rot \mid \Delta T_{switch} = \Delta t_{switch}, C^{\Delta+} = c^{\Delta+}, T_{cycle} = t_{cycle}, X_{rot} = x_{rot}\right)$$

$$* P(X_{rot} = x_{rot}) * P\left(T_{cycle} = t_{cycle}\right) dx_{rot} \, dt_{cycle}$$

Der Term $P(C_g = rot \mid \Delta T_{switch} = \Delta t_{switch}, C^{\Delta+} = c^{\Delta+}, T_{cycle} = t_{cycle}, X_{rot} = x_{rot})$ ist wie oben angegeben bestimmbar.
$P(X_{rot} = x_{rot})$ ist die Wahrscheinlichkeit, dass die Phasendauer $X_{rot}$ einen bestimmten Wert $X_{rot}$ aus dem oben erwähnten Wertebereich [$rot_{min}$; $rot_{max}$] für die Phasendauer annimmt. $P(T_{cycle} = t_{cycle})$ ist die Wahrscheinlichkeit, dass die Umlaufzeit $T_{cycle}$ einen bestimmten Wert $t_{cycle}$ aus dem oben erwähnten Wertebereich [$t_{cycle\_min}$; $t_{cycle\_max}$] für die Umlaufzeit annimmt. Im Falle einer wie hier vorliegenden Gleichverteilung der als Zufallsvariablen modellierten Umlaufzeiten und Phasendauern, ist die Wahrscheinlichkeit für jeden Wert aus den Wertebereichen gleich groß.
Um die Gesamtwahrscheinlichkeit zu berechnen, können die Integrale bspw. durch Summen angenähert werden. Auch andere Approximationsverfahren sind möglich.
Im Fall III trifft keiner der beiden vorherigen Fälle I und II zu. Das bedeutet, dass im Fall III nur die zuletzt gesehene/erfasste Ampelphase der Ampel bekannt ist. Entsprechend ist unbekannt, wie lange diese Ampelphase schon vorliegt.
Daher wird die Wahrscheinlichkeit $P(C_g=rot)$ unter Berücksichtigung einer relativen Dauer der Grün- und Rotphasen und der vergangenen Zeit zwischen Zeitpunkt $T_i$ und Zeitpunkt $T_e$ in Abhängigkeit der zuletzt gesehenen Phase ermittelt. Somit ergeben sich vier Unterfälle III.a, III.b, III.c und III.d. Die obigen Erklärungen für den Fall II gelten entsprechend.
Für den Fall III.a, bei dem die zuletzt gesehen Phase $C_g=rot$ ist, gilt dann für die Wahrscheinlichkeit $P(C_g=rot)$ Folgendes:

$$P\left(C_g = rot\right) = P\left(C_g = rot \mid \Delta T_e = \Delta t_e, \Delta T_i = \Delta t_i, C_g = rot, T_{cycle} = t_{cycle}, X_{rot} = x_{rot}\right)$$

$$= \int_{\Delta t_i}^{\Delta t_e + t_{cycle}} P\left(C_g = rot \mid \Delta T_{switch} = \Delta t_{switch}, C_g = rot, T_{cycle} = t_{cycle}, X_{rot} = x_{rot}\right)$$

$$* P\left(\Delta T_{switch} = \Delta t_{switch} \mid \Delta T_e = \Delta t_e, \Delta T_i = \Delta t_i, C_g = rot, T_{cycle} = t_{cycle}, X_{rot} = x_{rot}\right) d\Delta t_{switch}$$

Ferner gilt:

$$P\left(C_g = rot \mid \Delta T_{switch} = \Delta t_{switch}, C_g = rot, T_{cycle} = t_{cycle}, X_{rot} = x_{rot}\right)$$

$$= \begin{cases} 1, & \Delta t_{switch} \bmod t_{cycle} < x_{rot} * t_{cycle} \\ 0, & \Delta t_{switch} \bmod t_{cycle} \geq x_{rot} * t_{cycle} \end{cases}$$

Der Phasenwechsel-Zeitpunkt $T_{switch}$ und entsprechend das Zeitintervall $\Delta T_{switch}$ sind unbekannt und werden daher modelliert. Dazu wird angenommen, dass der Phasenwechsel-Zeitpunkt $T_{switch}$ zwischen einer Umlaufzeit $T_{cycle}$ vor dem ersten Erfassungszeitpunkt $T_i$ und dem letzten Erfassungszeitpunkt $T_e$ erfolgen musste. Daher gilt für die Wahrscheinlichkeit, dass der Phasenwechsel-Zeitpunkt $T_{switch}$ zu einem bestimmten Zeitpunkt $t_{switch}$ erfolgt bzw. dass

das Zeitintervall $\Delta T_{switch}$ einen bestimmten Wer $\Delta t_{switch}$ aufweist, Folgendes:

$$P\big(\Delta T_{switch} = \Delta t_{switch} \big| \Delta T_e = \Delta t_e, \Delta T_i = \Delta t_i, C_g = rot, T_{cycle} = t_{cycle}, \mathrm{X_{rot}} = \mathrm{x_{rot}}\big)$$

$$= \frac{1}{\Delta t_e + \Delta t_{cycle} - \Delta t_i}$$

In dem Fall III.b ist die zuletzt gesehene Phase $C_g$=grün. Dieser entspricht dem Fall III.a, nur dass die Grünphase die Rotphase im Fall III.a ersetzt. Somit gilt:

$$P\big(C_g = rot\big) = P\big(C_g = rot \big| \Delta T_e = \Delta t_e, \Delta T_i = \Delta t_i, C_g = gr\ddot{u}n, T_{cycle} = t_{cycle}, \mathrm{X_{rot}} = \mathrm{x_{rot}}\big)$$

$$= \int_{\Delta t_i}^{\Delta t_e + t_{cycle}} P\big(C_g = rot \big| \Delta T_{switch} = \Delta t_{switch}, C_g = gr\ddot{u}n, T_{cycle} = t_{cycle}, \mathrm{X_{rot}} = \mathrm{x_{rot}}\big)$$

$$* P\big(\Delta T_{switch} = \Delta t_{switch} \big| \Delta T_e = \Delta t_e, \Delta T_i = \Delta t_i, C_g = gr\ddot{u}n, T_{cycle} = t_{cycle}, \mathrm{X_{rot}} = (\mathrm{x_{rot}})d\Delta t_{switch}$$

Für die Wahrscheinlichkeit, dass zum Event-Zeitpunkt $T_{event}$ die rote Ampelphase vorliegt, wenn zuletzt die grüne Ampelphase gesehen wurde, gilt:

$$P\big(C_g = rot \big| \Delta T_{switch} = \Delta t_{switch}, C_g = gr\ddot{u}n, T_{cycle} = t_{cycle}, \mathrm{X_{rot}} = \mathrm{x_{rot}}\big)$$

$$= \begin{cases} 0, & \Delta t_{switch} \bmod \mathrm{t_{cycle}} < (1 - x_{rot}) * t_{cycle} \\ 1, & \Delta t_{switch} \bmod \mathrm{t_{cycle}} \geq (1 - x_{rot}) * t_{cycle} \end{cases}$$

Für die Wahrscheinlichkeit, dass der Phasenwechsel-Zeitpunkt $T_{switch}$ zu einem bestimmten Zeitpunkt $t_{switch}$ erfolgt bzw. dass das Zeitintervall $\Delta T_{switch}$ einen bestimmten Wer $\Delta t_{switch}$ aufweist, gilt analog zum Fall III.a folgendes:

$$P\big(\Delta T_{switch} = \Delta t_{switch} \big| \Delta T_e = \Delta t_e, \Delta T_i = \Delta t_i, C_g = gr\ddot{u}n, T_{cycle} = t_{cycle}, \mathrm{X_{rot}} = \mathrm{x_{rot}}\big)$$

$$= \frac{1}{\Delta t_e + \Delta t_{cycle} - \Delta t_i}$$

Es liegt die gleiche Wahrscheinlichkeit $P(\Delta T_{switch} = \Delta t_{switch} | ...)$ für Fall III.a und III.b vor, da sich die Umlaufzeit $T_{cycle}$ des Referenzampelzyklus nicht verändert.

In dem Fall III.c ist die zuletzt gesehene Ampelphase gelb. Hier wird angenommen, dass der Zeitpunkt $T_e$ dem Zeitpunkt $T_{switch}$ entspricht, also $T_e = T_{switch}$. Entsprechend gilt auch für die Zeitintervalle $\Delta t_e = \Delta t_{switch}$. In diesem Fall gilt für die Wahrscheinlichkeit $P(C_g = rot)$:

$$P\big(C_g = rot \big| \Delta T_e = \Delta t_e, \Delta T_i = \Delta t_i, C_g = gelb, T_{cycle} = t_{cycle}, \mathrm{X_{rot}} = \mathrm{x_{rot}}\big)$$

$$= \begin{cases} 1, & \Delta t_e \leq x_{rot} * t_{cycle} \\ 0, & \Delta t_e > x_{rot} * t_{cycle} \end{cases}$$

In dem Fall III.d ist die zuletzt gesehene Ampelphase "rot+gelb". Auch hier wird angenommen, dass der Zeitpunkt $T_e$ dem Zeitpunkt $T_{switch}$ entspricht, also $T_e = T_{switch}$. Entsprechend gilt auch für die Zeitintervalle $\Delta t_e = \Delta t_{switch}$ Somit folgt:

$$P\big(C_g = rot \big| \Delta T_e = \Delta t_e, \Delta T_i = \Delta t_i, C_g = rot + gelb, T_{cycle} = t_{cycle}, \mathrm{X_{rot}} = \mathrm{x_{rot}}\big)$$

$$= \begin{cases} 0, & \Delta t_e \leq (1 - x_{rot}) * t_{cycle} \\ 1, & \Delta t_e > (1 - x_{rot}) * t_{cycle} \end{cases}$$

Die Wahrscheinlichkeiten $P(C_g = rot)$ für die Fälle III.a bis III.d können für alle möglichen Umlaufzeiten $T_{cycle}$ und alle möglichen Phasendauen $X_{rot}$ berechnet werden, ähnlich wie bei Fall II. So gilt für die Gesamtwahrscheinlichkeit

Folgendes:

$$P\big(C_g = rot \,\big|\, \Delta T_e = \Delta t_e, \Delta T_i = \Delta t_i, C_g = c\,\big) =$$

$$= \int_{t_{cycle\_min}}^{t_{cycle\_max}} \int_{\max\{rot_{min}; \frac{\Delta t_i - \Delta t_e}{t_{cycle}}\}}^{rot_{max}} P\big(C_g = rot \,\big|\, \Delta T_e = \Delta t_e, \Delta T_i = \Delta t_i, C_g = c, T_{cycle} = t_{cycle}, X_{rot} = x_{rot}\,\big)$$

$$* P(X_{rot} = x_{rot}) * P\big(T_{cycle} = t_{cycle}\big)\, dx_{rot}\, dt_{cycle}$$

Auch hier können die Integrale bspw. durch Summen angenähert werden, um die Gesamtwahrscheinlichkeit zu berechnen. Auch andere Approximationsverfahren sind möglich.

In Figur 7 sind schematisch und beispielhaft zwei Phasenverläufe 9, 9' von zwei Ampelobjekten dargestellt. Die Phasenverläufe 9, 9' zeigen die grüne Ampelphase G, die rote Ampelphase R, die gelbe Ampelphase Y und die rot-gelbe Ampelphase R+Y.

Die Kombination der durchgezogenen Linien ergibt die Übereinstimmungsdauer Tm der zwei Phasenverläufe 9, 9', in der sie die gleiche Ampelphase (gleichzeitig) aufweisen. Die Kombinationen der durchgezogenen Linien mit der gestrichelten Linie ergibt die Überlappungsdauer Tt der zwei Phasenverläufe 9, 9', in der sich die Phasenverläufe 9, 9' (unabhängig von ihren Ampelphasen) zeitlich überlappen.

Die Überlappungsdauer Tt gibt also diejenige Zeitdauer an, zu welcher die beiden Phasenverläufe 9, 9' gleichzeitig vorliegen, d.h. zeitlich überlappen. Die Übereinstimmungsdauer Tm gibt diejenige Zeitdauer (innerhalb der Überlappungsdauer Tt) an, zu welcher die Phasenverläufe 9, 9' die gleiche Ampelphase aufweisen.

Ferner sind in Figur 7 entsprechende erste Erfassungszeitpunkte $T_i$, letzte Erfassungszeitpunkte $T_e$ und Phasenwechsel-Zeitpunkte $T_{switch}$ der Phasenverläufe 9, 9' dargestellt.

**Bezugszeichenliste**

| | |
|---|---|
| A | Ampelanlage (A) |
| F1-F3 | Fahrspuren |
| Fb | Fahrbahnabschnitt |
| G | grüne Ampelphase |
| $tp_1$-$tp_5$ | Ampel |
| $n_c$ | Ampelobjekte |
| $n_{c,t}$ | einem Cluster t zugeordnetes Ampelobjekt |
| R | rote Ampelphase |
| R+Y | rot-gelbe Ampelphase |
| $t_1$-$t_5$ | (Ampel-/Ampelobjekt-)Cluster |
| $tp_1$-$tp_5$ | physikalische Ampel |
| Y | gelbe Ampelphase |
| 1 | Fahrzeug |
| 3 | Erfassungseinrichtung |
| 5 | Funkschnittstelle |
| 7 | Ampelbild |
| 7' | Ampelbild |
| 9 | Phasenverlauf |
| 9' | Phasenverlauf |
| S... | Verfahrensschritte |

**Patentansprüche**

1. Verfahren zum Aufbereiten von Daten über eine einen Fahrbahnabschnitt steuernde Ampelanlage (A) mit mindestens einer Ampel ($tp_1$, $tp_2$, $tp_3$, $tp_4$, $tp_5$), mit:

   - (S101) Abrufen von Ampelobjekten ($n_c$), die Ampelinformationen über die Ampelanlage (A) repräsentieren, mittels einer Punktwolke $\{p''_n\}$ in einem Koordinatensystem (K) darstellbar sind und von einer Vielzahl von Fahrzeugen (1) mit Erfassungseinrichtungen (3) erfasst werden, wobei das Abrufen der Ampelobjekte ($n_c$) ferner umfasst:

- (S102) Abrufen eines Verlaufs des Fahrbahnabschnitts (Fb);
- (S103) Abrufen einer Ampellinie, die eine Position der Ampelanlage (A) entlang des Fahrbahnabschnitts (Fb) angibt und Ermitteln einer Längsrichtung des Fahrbahnabschnitts (Fb) auf Höhe der Ampellinie; und
- (S104) Verwerfen der Ampelobjekte ($n_c$), die in der ermittelten Längsrichtung einen vorbestimmten Grenzabstand zu einem Medianwert aller Ampelobjekte überschreiten;

- (S106) Erkennen von mindestens einem Cluster in den Ampelobjekten ($n_c$), wobei ein erkanntes Cluster ($t_1$, $t_2$, $t_3$, $t_4$) eine entsprechende der mindestens einen Ampel ($tp_1$, $tp_2$, $tp_3$, $tp_4$, $tp_5$) der Ampelanlage (A) repräsentiert;
- (S107) Zuordnen der Ampelobjekte ($n_c$) zu dem mindestens einen Cluster ($t_1$, $t_2$, $t_3$, $t_4$); und
- (S110) Ableiten einer räumlichen Position der mindestens einen Ampel ($tp_1$, $tp_2$, $tp_3$, $tp_4$, $tp_5$) anhand der zugeordneten Ampelobjekte ($n_{c,t}$).

2.  Verfahren nach dem Anspruch 1, wobei der vorbestimmte Grenzabstand von einer Standardabweichung der Ampelobjekte ($n_c$) abhängig ist.

3.  Verfahren nach dem Anspruch 1, wobei das Erkennen des mindestens einen Clusters ($t_1$, $t_2$, $t_3$, $t_4$) ferner umfasst:

- (S105) Projizieren der Punktwolke $\{p''_n\}$ auf eine Ebene, die den Fahrbahnabschnitt (Fb) an der Ampellinie senkrecht schneidet; und
- (S106) Erkennen des mindestens einen Clusters ($t_1$, $t_2$, $t_3$, $t_4$) von Ampelobjekten ($n_c$) mittels der projizierten Punktwolke $\{p'''n\}$.

4.  Verfahren nach einem der vorherigen Ansprüche, wobei das Erkennen des mindestens einen Clusters ($t_1$, $t_2$, $t_3$, $t_4$) ferner umfasst:

- (S108) Verwerfen von jedem Cluster, dessen Anzahl an Ampelobjekten ($n_c$) kleiner ist als eine vorbestimmte Mindestanzahl.

5.  Verfahren nach einem der vorherigen Ansprüche, wobei das Erkennen des mindestens einen Clusters ($t_1$, $t_2$, $t_3$, $t_4$) ferner umfasst:

- (S108) Durchführen einer Hauptkomponentenanalyse auf das mindestens eine Cluster ($t_1$, $t_2$, $t_3$, $t_4$); und wenn ein Eigenwert des mindestens einen Clusters ($t_1$, $t_2$, $t_3$, $t_4$) einen vorbestimmten Grenzeigenwert überschreitet:
- (S108) Erkennen von mindestens einem Sub-Cluster in den Ampelobjekten des mindestens einen Clusters ($t_1$, $t_2$, $t_3$, $t_4$), wobei jedes erkannte Sub-Cluster eine entsprechende der mindestens einen Ampel ($tp_1$, $tp_2$, $tp_3$, $tp_4$, $tp_5$) der Ampelanlage (A) repräsentiert.

6.  Verfahren nach einem der vorherigen Ansprüche, wobei das Ableiten der räumlichen Position der mindestens einen Ampel ($tp_1$, $tp_2$, $tp_3$, $tp_4$, $tp_5$) umfasst:

- (S110) Bilden eines räumlichen Mittelwerts über die Ampelobjekte ($n_c$), die dem Cluster ($t_1$, $t_2$, $t_3$, $t_4$) zugeordnet sind, das die mindestens eine Ampel ($tp_1$, $tp_2$, $tp_3$, $tp_4$, $tp_5$) repräsentiert.

7.  Verfahren nach einem der vorherigen Ansprüche, wobei das Erkennen des mindestens einen Clusters mittels eines ersten Clusteringverfahrens und/oder das Erkennen des mindestens einen Sub-Clusters mittels eines zweiten Clusteringverfahrens erfolgt.

8.  Verfahren nach Anspruch 7, wobei mindestens eines von dem ersten und dem zweiten Clusteringverfahren den DBSCAN Algorithmus umfasst.

9.  Verfahren nach Anspruch 8, wobei eine Nachbarschaftslänge des ersten Clusteringverfahrens größer ist als eine Nachbarschaftslänge des zweiten Clusteringverfahrens, wenn das erste und das zweite Clusteringverfahren den DBSCAN Algorithmus umfassen.

10. Verfahren nach einem der vorherigen Ansprüche, wobei die Ampelobjekte ($n_c$) überfahrtsspezifisch erfasst werden.

**11.** Vorrichtung zum Aufbereiten von Daten über eine einen Fahrbahnabschnitt steuernde Ampelanlage (A) mit mindestens einer Ampel (tp$_1$, tp$_2$, tp$_3$, tp$_4$, tp$_5$), wobei die Vorrichtung ausgebildet und eingerichtet ist, ein Verfahren nach einem der Ansprüche 1 bis 10 auszuführen.

**12.** Computerprogramm zum Aufbereiten von Daten über eine einen Fahrbahnabschnitt steuernde Ampelanlage (A) mit mindestens einer Ampel (tp$_1$, tp$_2$, tp$_3$, tp$_4$, tp$_5$), umfassend Befehle, die bei der Ausführung des Programms durch einen Computer diesen veranlassen, das Verfahren nach einem der Ansprüche 1 bis 10 auszuführen.

**Claims**

**1.** Method for processing data about a traffic light system (A) that controls a road portion and has at least one traffic light (tp$_1$, tp$_2$, tp$_3$, tp$_4$, tps), comprising:

- (S101) retrieving traffic light objects ($n_c$) which represent traffic light information about the traffic light system (A), can be represented in a coordinate system (K) by means of a point cloud $\{p''_n\}$ and are recorded by a plurality of vehicles (1) with recording devices (3), wherein the retrieval of the traffic light objects ($n_c$) also includes:
- (S102) retrieving a course of the road portion (Fb);
- (S103) retrieving a traffic light line which indicates a position of the traffic light system (A) along the road portion (Fb) and determining a longitudinal direction of the road portion (Fb) at the level of the traffic light line; and
- (S104) discarding the traffic light objects ($n_c$) which exceed a predetermined limit distance to a median value of all traffic light objects in the determined longitudinal direction;
- (S106) identifying at least one cluster in the traffic light objects ($n_c$), wherein an identified cluster (t$_1$, t$_2$, t$_3$, t$_4$) represents a corresponding one of the at least one traffic lights (tp$_1$, tp$_2$, tp$_3$, tp$_4$, tps) of the traffic light system (A);
- (S107) assigning the traffic light objects ($n_c$) to the at least one cluster (t$_1$, t$_2$, t$_3$, t$_4$); and
- (S110) deriving a spatial position of the at least one traffic light (tp$_1$, tp$_2$, tp$_3$, tp$_4$, tps) on the basis of the assigned traffic light objects ($n_{c,t}$).

**2.** Method according to claim 1, wherein the predetermined limit distance depends on a standard deviation of the traffic light objects ($n_c$).

**3.** Method according to claim 1, wherein the identification of the at least one cluster (t$_1$, t$_2$, t$_3$, t$_4$) also includes:

- (S105) projecting the point cloud $\{p''_n\}$ onto a plane that perpendicularly intersects the road portion (Fb) at the traffic light line; and
- (S106) identifying the at least one cluster (t$_1$, t$_2$, t$_3$, t$_4$) of traffic light objects ($n_c$) by means of the projected point cloud $\{p'''_n\}$.

**4.** Method according to any of the preceding claims, wherein the identification of the at least one cluster (t$_1$, t$_2$, t$_3$, t$_4$) also includes:

- (S108) discarding each cluster of which the number of traffic light objects ($n_c$) is less than a predetermined minimum number.

**5.** Method according to any of the preceding claims, wherein the identification of the at least one cluster (t$_1$, t$_2$, t$_3$, t$_4$) also includes:

- (S108) performing a principal component analysis on the at least one cluster (t$_1$, t$_2$, t$_3$, t$_4$); and

if an eigenvalue of the at least one cluster (t$_1$, t$_2$, t$_3$, t$_4$) exceeds a predetermined limit eigenvalue:

- (S108) identifying at least one sub-cluster in the traffic light objects of the at least one cluster (t$_1$, t$_2$, t$_3$, t$_4$), wherein each identified sub-cluster represents a corresponding one of the at least one traffic lights (tp$_1$, tp$_2$, tp$_3$, tp$_4$, tps) of the traffic light system (A).

**6.** Method according to any of the preceding claims, wherein the derivation of the spatial position of the at least one traffic light (tp$_1$, tp$_2$, tp$_3$, tp$_4$, tps) includes:

- (S110) forming a spatial average over the traffic light objects ($n_c$) which are assigned to the cluster ($tp_1$, $tp_2$, $tp_3$, $tp_4$) that represents the at least one traffic light ($tp_1$, $tp_2$, $tp_3$, $tp_4$, tps).

7. Method according to any of the preceding claims, wherein the identification of the at least one cluster is carried out by means of a first clustering method and/or the identification of the at least one sub-cluster is carried out by means of a second clustering method.

8. Method according to claim 7, wherein at least one of the first and second clustering methods includes the DBSCAN algorithm.

9. Method according to claim 8, wherein a neighborhood length of the first clustering method is greater than a neighborhood length of the second clustering method when the first and second clustering methods include the DBSCAN algorithm.

10. Method according to any of the preceding claims, wherein the traffic light objects ($n_c$) are recorded on a crossing-specific basis.

11. Device for processing data about a traffic light system (A) that controls a road portion and has at least one traffic light ($tp_1$, $tp_2$, $tp_3$, $tp_4$, tps), wherein the device is designed and configured to carry out a method according to any of claims 1 to 10.

12. Computer program for processing data about a traffic light system (A) that controls a road portion and has at least one traffic light ($tp_1$, $tp_2$, $tp_3$, $tp_4$, tps), including instructions which, when the program is carried out by a computer, prompt the computer to carry out the method according to any of claims 1 to 10.

**Revendications**

1. Procédé de préparation de données concernant une installation de feux de signalisation (A) commandant une section de voie de circulation et comportant au moins un feu de signalisation ($tp_1$, $tp_2$, $tp_3$, $tp_4$, tps), comprenant :

- (S101) la récupération d'objets de feux de signalisation ($n_c$), qui représentent des informations de feux de signalisation concernant l'installation de feux de signalisation (A), qui peuvent être représentés au moyen d'un nuage de points $\{p''_n\}$ dans un système de coordonnées (K) et qui sont détectés par une pluralité de véhicules (1) comportant des dispositifs de détection (3), dans lequel la récupération des objets de feux de signalisation ($n_c$) comprend en outre :
- (S102) la récupération d'un tracé de la section de voie de circulation (Fb) ;
- (S103) la récupération d'une ligne de feux de signalisation indiquant une position de l'installation de feux de signalisation (A) le long de la section de voie de circulation (Fb) et la détermination d'une direction longitudinale de la section de voie de circulation (Fb) à la hauteur de la ligne de feux de signalisation ; et
- (S104) le rejet des objets de feux de signalisation ($n_c$) qui, dans la direction longitudinale déterminée, dépassent une distance limite prédéterminée par rapport à une valeur médiane de tous les objets de feux de signalisation ;
- (S106) la reconnaissance d'au moins une grappe dans les objets de feux de signalisation ($n_c$), dans lequel une grappe ($t_1$, $t_2$, $t_3$, $t_4$) reconnue représente un feu de signalisation correspondant parmi les au moins un feu de signalisation ($tp_1$, $tp_2$, $tp_3$, $tp_4$, tps) de l'installation de feux de signalisation (A) ;
- (S107) l'attribution des objets de feux de signalisation ($n_c$) à l'au moins une grappe ($tp_1$, $tp_2$, $tp_3$, $tp_4$) ; et
- (S110) la déduction d'une position spatiale de l'au moins un feu de signalisation ($tp_1$, $tp_2$, $tp_3$, $tp_4$, tps) à l'aide des objets de feu de signalisation ($n_{c,t}$) attribués.

2. Procédé selon la revendication 1, dans lequel la distance limite prédéterminée dépend d'un écart-type des objets de feux de signalisation ($n_c$).

3. Procédé selon la revendication 1, dans lequel la reconnaissance de l'au moins une grappe ($t_1$, $t_2$, $t_3$, $t_4$) comprend en outre :

- (S105) la projection du nuage de points $\{p''_n\}$ sur un plan qui coupe perpendiculairement la section de voie de circulation (Fb) au niveau de la ligne de feux de signalisation ; et
- (S106) la reconnaissance de l'au moins une grappe ($t_1$, $t_2$, $t_3$, $t_4$) d'objets de feux de signalisation ($n_c$) au moyen du nuage de points $\{p'''_n\}$ projeté.

4. Procédé selon l'une des revendications précédentes, dans lequel la reconnaissance de l'au moins une grappe ($t_1$, $t_2$, $t_3$, $t_4$) comprend en outre :

   - (S108) le rejet de chaque grappe dont le nombre d'objets de feux de signalisation ($n_c$) est inférieur à un nombre minimum prédéterminé.

5. Procédé selon l'une des revendications précédentes, dans lequel la reconnaissance de l'au moins une grappe ($t_1$, $t_2$, $t_3$, $t_4$) comprend en outre :

   - (S108) la réalisation d'une analyse en composantes principales sur l'au moins une grappe ($t_1$, $t_2$, $t_3$, $t_4$) ; et

   lorsqu'une valeur propre de l'au moins une grappe ($t_1$, $t_2$, $t_3$, $t_4$) dépasse une valeur limite prédéterminée :

   - (S108) la reconnaissance d'au moins une sous-grappe dans les objets de feux de signalisation de l'au moins une grappe ($t_1$, $t_2$, $t_3$, $t_4$), dans lequel chaque sous-grappe reconnue représente un feu de signalisation correspondant de l'au moins un feu de signalisation (tp$_1$, tp$_2$, tp$_3$, tp$_4$, tps) de l'installation de feux de signalisation (A).

6. Procédé selon l'une des revendications précédentes, dans lequel la déduction de la position spatiale de l'au moins un feu de signalisation (tp$_1$, tp$_2$, tp$_3$, tp$_4$, tps) comprend :

   - (S110) la formation d'une moyenne spatiale sur les objets de feux de signalisation ($n_c$) attribués à la grappe ($t_1$, $t_2$, $t_3$, $t_4$) représentant l'au moins un feu de signalisation (tp$_1$, tp$_2$, tp$_3$, tp$_4$, tps).

7. Procédé selon l'une des revendications précédentes, dans lequel la reconnaissance de l'au moins une grappe est effectuée au moyen d'un premier procédé de regroupement et/ou la reconnaissance de l'au moins une sous-grappe est effectuée au moyen d'un second procédé de regroupement.

8. Procédé selon la revendication 7, dans lequel au moins l'un des premier et second procédés de regroupement comprend l'algorithme DBSCAN.

9. Procédé selon la revendication 8, dans lequel une longueur de voisinage du premier procédé de regroupement est supérieure à une longueur de voisinage du second procédé de regroupement lorsque les premier et second procédés de regroupement comprennent l'algorithme DBSCAN.

10. Procédé selon l'une des revendications précédentes, dans lequel les objets de feux de signalisation ($n_c$) sont détectés de manière spécifique à la traversée.

11. Dispositif de préparation de données concernant une installation de feux de signalisation (A) commandant une section de voie de circulation et comportant au moins un feu de signalisation (tp$_1$, tp$_2$, tp$_3$, tp$_4$, tps), dans lequel le dispositif est conçu et agencé pour mettre en œuvre un procédé selon l'une des revendications 1 à 10.

12. Programme informatique de préparation de données concernant une installation de feux de signalisation (A) commandant une section de voie de circulation et comportant au moins un feu de signalisation (tp$_1$, tp$_2$, tp$_3$, tp$_4$, tps), comprenant des instructions qui, lors de l'exécution du programme par un ordinateur, amènent ce dernier à mettre en œuvre le procédé selon l'une des revendications 1 à 10.

Fig. 1

```
          ┌─────────┐
          │    S    │
          └─────────┘
               │
               ▼
          ┌─────────┐
          │  S101   │
          └─────────┘
               │
               ▼
          ┌─────────┐
          │  S102   │
          └─────────┘
               │
               ▼
          ┌─────────┐
          │  S103   │
          └─────────┘
               │
               ▼
          ┌─────────┐
          │  S104   │
          └─────────┘
               │
               ▼
          ┌─────────┐
          │  S105   │
          └─────────┘
               │
               ▼
          ┌─────────┐
          │  S106   │
          └─────────┘
               │
               ▼
          ┌─────────┐
          │  S107   │
          └─────────┘
               │
               ▼
          ┌─────────┐
          │  S108   │
          └─────────┘
               │
               ▼
          ┌─────────┐
          │  S109   │
          └─────────┘
               │
               ▼
          ┌─────────┐
          │  S110   │
          └─────────┘
               │
               ▼
          ┌─────────┐
          │    S    │
          └─────────┘
```

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1020132019206 A1
- DE 102017127346 A1
- US 20180285664 A1
- DE 102018007962 A1